# EUROPEAN PATENT APPLICATION

(11) **EP 4 401 441 A1**
(43) Date of publication of application: **17.07.2024**
(21) Application number: 24151212.8
(22) Date of filing: 10.01.2024
(51) Int. Cl.: H04W 12/041, H04W 4/48, H04L 9/40

(54) **METHOD AND APPARATUS FOR SHARING KEYS FOR ENCRYPTION AND/OR DECRYPTION**

(30) Priority: 10.01.2023 US 202363438237 P; 09.01.2024 US 202418408185
(71) Applicant: Marvell Asia Pte, Ltd., Singapore 369522 (SG)
(72) Inventor: Parmar, Harivaden, Finchampstead, Wokingham, RG40 4UH (GB); Edem, Brian, Saratoga, CA, 95070 (US)
(74) Representative: Grünecker Patent- und Rechtsanwälte PartG mbB

(57) **Abstract**

A vehicle subsystem assembly transmits an identifier of the vehicle subsystem assembly to an electronic control unit (ECU) via an Ethernet link as part of a procedure for obtaining a first key for secure communications with the ECU via the Ethernet link from a backend system. Then, the vehicle subsystem assembly receives an encrypted message from the ECU via the Ethernet link and decrypts the encrypted message using a second key stored at the vehicle subsystem assembly to generate a first decrypted message. The vehicle subsystem assembly determines whether the first decrypted message includes a second identifier that matches the first identifier, and extracts the first key from the decrypted message. In response to determining that the decrypted message includes the second identifier that matches the first identifier, the vehicle subsystem assembly uses the first key in connection with secure communications between the vehicle subsystem assembly and the ECU.

## Description

### Cross References to Related Applications

This application claims the benefit of U.S. Provisional Patent App. No. 63/438,237, entitled "Initial CAK Sharing Without Using a Public/Private Key," filed on January 10, 2023, the disclosure of which is expressly incorporated herein by reference in its entirety.

### Field of Technology

The present disclosure relates generally to communication networks, and more particularly to distributing a key for secure communications between devices in a communication network.

### Background

Modem vehicles include electronic control units (ECUs) that receive data from sensors, such as sensors related to i) engine monitoring (e.g., pressure sensors, temperature sensors, position sensors, oxygen sensors, nitrous oxide sensors, air flow sensors, etc.), ii) vehicle monitoring (e.g., vehicle speed sensors, etc.), iii) anti-lock braking (e.g., wheel speed sensors, etc.), iv) driver assistance (e.g., cameras, radar sensors, lidar sensors, rain sensors, etc.), v) user interfaces (e.g., touch screens, buttons, levers, switches, etc.), etc. Additionally, ECUs use received sensor data to perform control functions that involve controlling actuators, turning components on and off, controlling user interfaces (e.g., causing sounds to be generated, controlling a visual display, displaying video, etc.), etc.

Components of a vehicle (e.g., ECUs, sensors, actuators, etc.) are interconnected by in-vehicle communication networks that permit the components to exchange data. For example, Controller Area Network (CAN) is a communication standard that is widely used in the automotive industry. However, CAN has a limited transmission rate and requires significant amounts of wiring, among other limitations.

Automotive Ethernet is a type of Ethernet network adapted to the automotive environment, which enables high-speed data transfer within vehicles. Automotive Ethernet provides a significantly higher transmission rate as compared to CAN, which allows, among other things, the replacement of multiple CAN cables with a single Ethernet link. As a result, automotive Ethernet reduces the weight of wiring harnesses in vehicles while providing higher bandwidth data transmission compared to CAN. Because of the advantages of automotive Ethernet over CAN and because of the increasing adoption of advanced automotive technologies that require higher data rates, the use of automotive Ethernet in the automotive industry is significantly increasing.

In-vehicle communication networks have characteristics that are significantly different from typical Ethernet networks in a home or office environment. For instance, a communication disruption in an in-vehicle network while the vehicle is in motion may lead to a catastrophic failure, which may in turn lead to serious injury or death. As another example, unauthorized access to an in-vehicle network may result in inadvertent disruption to, or permit a malicious attack on, automotive systems.

It has been proposed that at least some data exchanged between components in a vehicle should be encrypted to improve security of the in-vehicle communication networks. For example, the Institute for Electrical and Electronics Engineers (IEEE) Standard 802.1AE, sometimes referred to as Media Access Control security (MACsec), provides point-to-point security on Ethernet links. More specifically, a first link partner and a second link partner use a key for encrypting and decrypting, and/or authenticating, data exchanged between the first link partner and the second link partner via an Ethernet link. When data on the Ethernet link is encrypted, it is difficult for an attacker to obtain the data. Additionally, when data on the Ethernet link can be authenticated, it is difficult for an attacker to insert malicious data because the malicious data will fail authentication. Further, detecting unauthorized devices on the communication link is made easier because unauthorized devices will not have the key and therefore data from unauthorized devices will not be properly encrypted and/or will fail authentication.

### Summary

In an embodiment, a method is implemented in a system that comprises i) a backend system that provides keys for symmetric encryption in vehicles, ii) an electronic control unit (ECU) communicatively coupled to the backend system, and iii) a vehicle subsystem assembly communicatively coupled to the ECU via an Ethernet link. The method comprises: transmitting, by the vehicle subsystem assembly, a first identifier of the vehicle subsystem assembly to the ECU via the Ethernet link as part of a procedure for obtaining, from the backend system, a first key for secure communications with the ECU via the Ethernet link; after transmitting the first identifier of the vehicle subsystem assembly to the ECU, receiving, at the vehicle subsystem assembly, a first encrypted message from the ECU via the Ethernet link as part of the procedure for obtaining the first key; decrypting, at the vehicle subsystem assembly, the first encrypted message using a second key stored at the vehicle subsystem assembly to generate a first decrypted message; determining, at the vehicle subsystem assembly, whether the first decrypted message includes a second identifier that matches the first identifier; extracting, at the vehicle subsystem assembly, the first key from the decrypted message; and in response to determining that the decrypted message includes the second identifier that matches the first identifier, using, at the vehicle subsystem assembly, the first key in connection with secure communications between the vehicle subsystem assembly and the ECU.

In another embodiment, an apparatus is for use in a vehicle subsystem assembly within a system that comprises i) a backend system that provides keys for symmetric encryption in vehicles, ii) an ECU communicatively coupled to the backend system, and iii) the vehicle subsystem assembly communicatively coupled to the ECU via an Ethernet link. The apparatus comprises: an Ethernet communication interface configured to communicate with the ECU via the Ethernet link; a memory configured to store a first identifier of the vehicle subsystem assembly and a first key; decryption circuitry; and a controller coupled to i) the Ethernet communication interface, ii) the memory, and iii) the decryption circuitry. The controller is configured to: control the Ethernet communication interface to transmit the first identifier of the vehicle subsystem assembly to the ECU via the Ethernet link as part of a procedure for obtaining, from the backend system, a second key for secure communications with the ECU via the Ethernet link; after the Ethernet communication interface transmits the first identifier, receive a first encrypted message from the ECU via the Ethernet link and the Ethernet communication interface as part of the procedure for obtaining the second key; control the decryption circuitry to decrypt the first encrypted message using the first key to generate a first decrypted message; determine whether the first decrypted message includes a second identifier that matches the first identifier; extract the second key from the decrypted message; and in response to determining that the decrypted message includes the second identifier that matches the first identifier, use the second key in connection with secure communications between the vehicle subsystem assembly and the ECU.

In yet another embodiment, a method is implemented in a system that comprises i) a backend system that provides keys for symmetric encryption in vehicles, ii) an ECU communicatively coupled to the backend system via a secure communication link, and iii) a vehicle subsystem assembly communicatively coupled to the ECU via an Ethernet link distinct from the secure communication link. The method includes: receiving, at the ECU, a first identifier of the vehicle subsystem assembly from the vehicle subsystem assembly via the Ethernet link as part of a procedure for i) obtaining a first key for secure communications with the vehicle subsystem assembly via the Ethernet link and ii) providing the first key to the vehicle subsystem assembly; transmitting, by the ECU, the first identifier to the backend system via the secure communication link as part of the procedure for i) obtaining the first key and ii) providing the first key to the vehicle subsystem assembly; in response to transmitting the first identifier to the backend system, receiving, at the ECU, the first key as part of the procedure for i) obtaining the first key and ii) providing the first key to the vehicle subsystem assembly; in response to transmitting the first identifier to the backend system, receiving, at the ECU, a first encrypted message as part of the procedure for i) obtaining the first key and ii) providing the first key to the vehicle subsystem assembly, the first encrypted message including the first key; transmitting, by the ECU, the first encrypted message to the vehicle subsystem assembly via the Ethernet link as part of the procedure for i) obtaining the first key and ii) providing the first key to the vehicle subsystem assembly; and using, at the ECU, the first key in connection with secure communications between the ECU and the vehicle subsystem assembly.

In yet another embodiment, an apparatus is for use in a vehicle subsystem assembly within a system that comprises i) a backend system that provides keys for symmetric encryption in vehicles, ii) an ECU communicatively coupled to the backend system, and iii) the vehicle subsystem assembly communicatively coupled to the ECU via an Ethernet link, the apparatus comprising: an Ethernet communication interface configured to communicate with the ECU via the Ethernet link; another communication interface configured to communicate with a computer system separate from the vehicle subsystem assembly, the computer system being communicatively coupled to the backend system; a memory; and a controller coupled to i) the Ethernet communication interface, ii) the other communication interface, and iii) the memory. The controller is configured to: receive a first identifier of the vehicle subsystem assembly from the vehicle subsystem assembly via the Ethernet link and the Ethernet communication interface as part of a procedure for i) obtaining a first key for secure communications with the vehicle subsystem assembly via the Ethernet link and ii) providing the first key to the vehicle subsystem assembly; control the other communication interface to transmit the first identifier to the computer system as part of the procedure for i) obtaining the first key and ii) providing the first key to the vehicle subsystem assembly; in response to transmitting the first identifier to the computer system, receive the first key from the backend system via the other communication interface as part of the procedure for i) obtaining the first key and ii) providing the first key to the vehicle subsystem assembly; store the first key in the memory; in response to transmitting the first identifier to the computer system, receive a first encrypted message from the backend system via the other communication interface as part of the procedure for i) obtaining the first key and ii) providing the first key to the vehicle subsystem assembly, the first encrypted message including the first key; control the Ethernet communication interface to transmit the first encrypted message to the vehicle subsystem assembly via the Ethernet link as part of the procedure for i) obtaining the first key and ii) providing the first key to the vehicle subsystem assembly; and use the first key in connection with secure communications between the ECU and the vehicle subsystem assembly.

In another embodiment, a method is implemented in a system that comprises i) a backend system that provides keys for symmetric encryption in vehicles, ii) an ECU communicatively coupled to the backend system via a secure communication link, and iii) a vehicle subsystem assembly communicatively coupled to the ECU via an Ethernet link distinct from the secure communication link, the method comprising: receiving, at the backend system, a first identifier of the vehicle subsystem assembly from the ECU via the secure communication link as part of a procedure for providing a first key for secure communications between the ECU and the vehicle subsystem assembly via the Ethernet link; determining, at the backend system, whether the first identifier is included in a database of identifiers of authorized vehicle components; and in response to determining that the first identifier is included in the database: retrieving from the database a second key corresponding to the first identifier, using, at the backend system, the second key to generate an encrypted message that includes the first key, the encrypted message intended for the vehicle subsystem assembly, and transmitting, by the backend system, the encrypted message to the ECU via the secure communication link for forwarding to the vehicle subsystem assembly by the ECU via the Ethernet link.

In yet another embodiment, a backend server system is for use in a system that further comprises i) an ECU communicatively coupled to the backend server system via a secure communication link, and ii) a vehicle subsystem assembly communicatively coupled to the ECU via an Ethernet link distinct from the secure communication link. The backend server system comprises: a communication interface communicatively coupled to the secure communication link; one or more processors; and one or more memories coupled to the one or more processors. The one or more memories store machine readable instructions that, when executed by the one or more processors, cause the one or more processors to: receive a first identifier of the vehicle subsystem assembly from the ECU via the secure communication link and via the communication interface as part of a procedure for providing a first key for secure communications between the ECU and the vehicle subsystem assembly via the Ethernet link; determine whether the first identifier is included in a database of identifiers of authorized vehicle components; and, in response to determining that the first identifier is included in the database: retrieve from the database a second key corresponding to the first identifier, use the second key to generate an encrypted message that includes the first key, the encrypted message intended for the vehicle subsystem assembly, and transmit the encrypted message to the ECU via the communication interface and via the secure communication link for forwarding to the vehicle subsystem assembly by the ECU via the Ethernet link.

### Brief Description of the Drawings

Fig. 1 is a simplified diagram of an example system in which various aspects, features, and elements described herein are implemented in accordance with various embodiments of this disclosure.
Figs. 2A-C are flow diagrams of an example method for generating and distributing keys for use in secure communications within in-vehicle communication networks, according to an embodiment.
Fig. 3 is a flow diagram of an example method for using a binding key in connection with communications between a vehicle subsystem assembly and an ECU via a communication link, according to an embodiment.
Fig. 4 is a simplified block diagram of an example electronic control unit (ECU) of the system of Fig. 1, according to an embodiment.
Fig. 5 is a simplified block diagram of an example integrated circuit (IC) of a vehicle subsystem assembly of the system of Fig. 1, according to an embodiment.

### Detailed Description

In various embodiments of methods, apparatuses, and systems described below, keys are distributed to vehicle components for use in secure communications between the vehicle components. In at least some embodiments described below, key distribution techniques permit use of less complex devices (e.g., one or more of less components, less processing power, less memory, etc.) in a secure in-vehicle communication network.

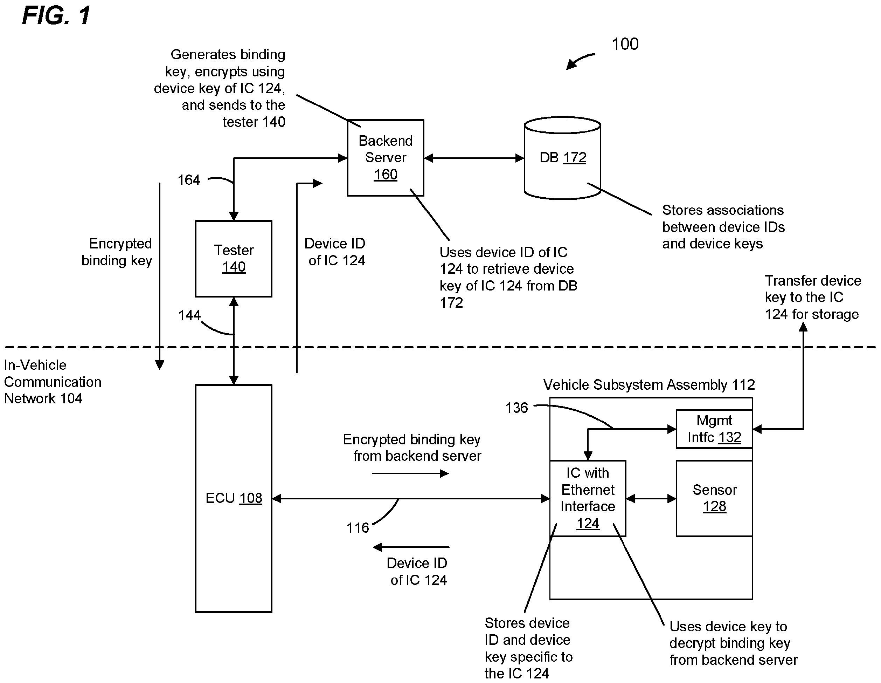

Fig. 1 is a simplified diagram of an example system 100 in which various aspects, features, and elements described herein are implemented in accordance with various embodiments of this disclosure. In some embodiments, the system 100 is at least partially included in a vehicle assembly plant, such as an automotive assembly plant, an aircraft assembly plant, etc. In other embodiments, the system 100 is at least partially included in a vehicle component assembly plant (sometimes referred to as a "Tier 1 Supplier"), such as a plant that assembles automotive components, which are subsequently provided to an automotive assembly plant for inclusion in automobiles. In other embodiments, the system 100 is at least partially included in a vehicle servicing facility (sometimes referred to as a "service center"), such as an authorized automotive service center in which maintenance and/or repairs are performed on automobiles by authorized personnel.

The system 100 includes an in-vehicle communication network 104. In the context of a vehicle assembly plant, the in-vehicle communication network 104 is included in a vehicle that is assembled or partially assembled, in some embodiments. In other embodiments, such as in the context of a vehicle component assembly plant, the communication network 104 is outside of a vehicle, such as in a test and/or configuration bed. For ease of explanation, the communication network 104 is referred to as an "in-vehicle communication network," but the communication network 104 may be outside of a vehicle in some embodiments.

The in-vehicle communication network 104 includes an electronic control unit (ECU) that is communicatively coupled to a vehicle subsystem assembly 112 via a communication link 116. The ECU 108 includes a first communication interface (not shown) that is configured to communicate with the vehicle subsystem assembly 112 via the cable 116. In an embodiment, the first communication interface comprises an Ethernet communication interface and the cable 116 comprises an Ethernet cable. In other embodiments, the first communication interface comprises another suitable communication interface and the cable comprises another suitable cable. The ECU 108 also includes encryption circuitry and decryption circuitry ("encryption/decryption circuitry") (not shown), in an embodiment. The ECU 108 additionally or alternatively includes authentication circuitry (not shown), in another embodiment. In another embodiment in which the ECU 108 includes encryption/decryption circuitry, the encryption/decryption circuitry is configured to perform authentication operations. In an embodiment, authentication operations include a sender of a message generates a message authentication code using a first key known to the sender and the message, and sends a frame that includes the message and the message authentication code. In an embodiment, authentication operations also include: a receiver of the frame calculates a new message authentication code using a second key known to the receiver and the message. According to an embodiment, in response to the receiver determining that the new message authentication code matches the message authentication code in the frame, the receiver determines that the message is authenticated; in response to the receiver determining that the new message authentication code does not match the message authentication code in the frame, the receiver determines that the message failed authentication.

In various embodiments, the ECU 108 also includes one or more of a processor, a memory, a hardware security module (HSM), etc., (not shown). In an embodiment, multiple circuit components (e.g., two or more of the first communication interface, the encryption/decryption circuitry, the authentication circuitry, the processor, etc.), are implemented as a system on a chip (SOC). One or more components of the ECU 108 (e.g., the SOC, the HSM, etc.) are mounted on one or more printed circuit boards (PCBs), according to various embodiments. The one or more PCBs are mounted in a housing, in some embodiments.

The vehicle subsystem assembly 112 includes one or more integrated circuits (ICs) 124 (referred to as "the IC 124 for ease of explanation) with a first communication interface that is configured to communicate with the ECU 108 via the cable 116. In an embodiment, the first communication interface comprises an Ethernet communication interface. In other embodiments, the first communication interface comprises another suitable communication interface. In various embodiments, the IC 124 also includes one or more of a controller, a memory, etc., (not shown). The controller performs acts related to obtaining a key for use in secure communication with the ECU 108, as will be described further below. The controller comprises a hardware state machine that performs at least some of the acts related to obtaining a key for use in secure communication with the ECU 108, according to an embodiment. The controller additionally or alternatively includes a processor coupled to a memory storing machine readable instructions that, when executed by the processor, cause the processor to perform at least some of the acts related to obtaining a key for use in secure communication with the ECU 108, according to another embodiment.

In an embodiment, the vehicle subsystem assembly 112 includes one or more sensors 128 (referred to as "the sensor 128" for ease of explanation) communicatively coupled to the IC 124. In an embodiment, the IC 124 includes a second communication interface that is configured to communicate with the sensor 128 (e.g., receive sensor data from the sensor 128 and optionally provide control signals to the sensor 128). More generally, the IC 124 receives sensor data from the sensor 128 and sends the sensor data to the ECU 108 via the communication link 116, in an embodiment.

In another embodiment, the vehicle subsystem assembly 112 includes one or more actuators (referred to as "the actuator" for ease of explanation) communicatively coupled to the IC 124. In an embodiment in which the vehicle subsystem assembly 112 includes the actuator, the second communication interface of the IC 124 that is configured to communicate with the actuator (e.g., provide control signals to the actuator and optionally receive feedback data from the actuator). More generally, the IC 124 receives control data from the ECU 108 via the communication link 116 uses the control data to generate control signals for controlling the actuator, in an embodiment.

The vehicle subsystem assembly 112 also comprises a management interface 132 that is configured to communicatively coupled the IC 124 and, optionally, one or more other components of the vehicle subsystem assembly 112, with a computer (not shown) via a communication link 136 for configuring the IC 124 and, optionally, the one or more other components of the vehicle subsystem assembly 112. In an embodiment, the communication link 136 comprises a serial peripheral interface (SPI) bus, the IC 124 includes SPI circuitry for communicating via the SPI bus 136, and the management interface 132 is configured to communicatively couple the computer to the IC 124 via the SPI bus 136.

In another embodiment, the communication link 136 comprises a management data input/output (MDIO) bus, the IC 124 includes MDIO circuitry for communicating via the MDIO bus 136, and the management interface 132 is configured to communicatively couple the computer to the IC 124 via the MDIO bus 136.

In another embodiment, the communication link 136 comprises an inter-integrated circuit (I2C) bus, the IC 124 includes I2C circuitry for communicating via the I2C bus 136, and the management interface 132 is configured to communicatively couple the computer to the IC 124 via the I2C bus 136.

In other embodiments, the communication link 136 is another suitable communication link different than an SPI bus, an MDIO bus, and an I2C bus, the IC 124 includes other suitable circuitry for communicating via the other suitable communication link 136, and the management interface 132 is configured to communicatively couple the computer to the IC 124 via the other suitable communication link.

In an embodiment, the ECU 108 and the IC 124 are configured to communicate via the cable 116 using asymmetric transmission rates. For example, data from the ECU 108 to the vehicle subsystem assembly 112 primarily includes control data at a first data rate, whereas data from the vehicle subsystem assembly 112 to the ECU 108 primarily includes sensor data at a second data rate significantly higher than the first data rate, in some embodiments. Communication via the cable 116 using asymmetric transmission rates significantly reduces power consumption as compared to a system in which communication via the cable 116 uses symmetric transmission rates, in an embodiment.

One or more components of the vehicle subsystem assembly 112 (e.g., the IC 124, the sensor 128, etc.) are mounted on one or more PCBs, according to various embodiments. The one or more PCBs are mounted in a housing, in some embodiments.

The ECU 108 is also communicatively coupled to a computing system 140 via a communication medium 144. The computing system 140 is configured to perform testing operations regarding the ECU 108 and/or the vehicle subsystem assembly 112, according to an embodiment. In other embodiments, the computing system 140 additionally alternatively is configured to perform other operations related to the ECU 108 and/or the vehicle subsystem assembly 112, such as configuration operations and key distribution operations such as described below. The computing system 140 is referred to as the "tester 140" for brevity, but in some embodiments the computing system 140 is not configured to perform testing operations regarding the ECU 108 and/or the vehicle subsystem assembly 112.

The tester 140 includes a processor and a memory coupled to the processor. The memory stores machine readable instructions that, when executed by the processor, cause the processor to perform various acts such as described herein. The tester 140 includes a first communication interface (not shown) that is configured to communicate with the ECU 108 via the communication medium 144. In an embodiment, the first communication interface comprises an Ethernet communication interface and the communication medium 144 comprises an Ethernet cable. In other embodiments, the first communication interface comprises another suitable communication interface configured to communicate via another suitable communication medium such as another suitable cable, free space (e.g., the first communication interface comprises an optical communication interface, a wireless communication interface, etc.), etc.

Referring again to the ECU 108, the ECU 108 includes a second communication interface (not shown) that is configured to communicate with the tester via the communication medium 144. In an embodiment, the second communication interface comprises an Ethernet communication interface and the communication medium 144 comprises an Ethernet cable. In other embodiments, the second communication interface comprises another suitable communication interface configured to communicate via another suitable communication medium such as another suitable cable, free space (e.g., the second communication interface comprises an optical communication interface, a wireless communication interface, etc.), etc.

The tester 140 also includes a second communication interface (not shown) that is configured to communicate with a backend server system 160 via a communication link 164. In an embodiment, the second communication interface comprises an Ethernet communication interface and the communication link 164 includes an Ethernet cable. In other embodiments, the second communication interface comprises another suitable communication interface configured to communicate via another suitable communication medium such as another suitable cable, free space (e.g., the second communication interface comprises an optical communication interface, a wireless communication interface, etc.), etc.

In embodiments in which the backend server system 160 is located remotely from the tester 140, the communication link 164 is established via one or more of a local area network (LAN), a wireless LAN (WLAN), a wide area network (WAN), a metropolitan area network (MAN), the Internet, a satellite link, a microwave link, a fiber optic link, etc. In an embodiment, the communication link 164 comprises a tunneled link via one or more of a WAN, a MAN, the Internet, etc.

The backend server system 160 comprises one or more computer systems that each include a processor and a memory coupled to the processor. The memory stores machine readable instructions that, when executed by the processor, cause the processor to perform various acts such as described herein. The backend server system 160 (sometimes referred to herein as the "backend server 160" for brevity) includes a first communication interface (not shown) that is configured to communicate with the tester 140 via the communication link 164. In an embodiment, the first communication interface comprises an Ethernet communication interface and the communication link 164 includes an Ethernet cable. In other embodiments, the second communication interface comprises another suitable communication interface configured to communicate via another suitable communication medium such as another suitable cable, free space (e.g., the first communication interface comprises an optical communication interface, a wireless communication interface, etc.), etc.

The backend server 160 is communicatively coupled to a database 172. The database 172 stores keys related to encryption and decryption, and/or authentication, of communications between vehicle components within in-vehicle communication networks. The database 172 also stores unique device identifiers (IDs) of authorized vehicle components that are, or will be, installed within vehicles and that are to communicate using keys stored in the database 172.

For example, the IC 124 is assigned a unique device ID, and the unique device ID is stored in a read-only memory (ROM) of the IC 124. In an embodiment, the ROM comprises electronic fuses (eFuses), which provides a secure way of storing the device ID. Additionally, the IC 124 is assigned a device key (sometimes referred to as an MSK), and the device key is stored in a ROM of the IC 124. In an embodiment, the ROM comprises eFuses. In an embodiment, the unique device ID and the device key are stored in a same ROM. In another embodiment, the unique device ID and the device key are stored in different respective ROMs.

Typically, the device ID is stored in the IC 124 by an IC manufacturer of the IC 124. The device key is typically stored in the IC 124 by a Tier 1 supplier or the vehicle manufacturer. Various suitable techniques for storing the device ID and the device key are utilized, including currently known techniques and techniques yet to be developed, and the method by which the device ID and the device key are stored in the IC 124 is not critical. In an embodiment, a computer (e.g., at the Tier 1 supplier, at the vehicle manufacturer, etc.) stores the device ID and/or the device key in the IC 124 via the management interface 132. In another embodiment, a first computer (e.g., at the Tier 1 supplier, at the vehicle manufacturer, etc.) stores the device ID in the IC 124 via the management interface 132, and a second computer (e.g., at the Tier 1 supplier, at the vehicle manufacturer, etc.) different than the first computer stores the device key in the IC 124 via the management interface 132.

In some embodiments, the ECU 108 (or an IC of the ECU 108) is also assigned a unique device ID, and the unique device ID is stored in a ROM of the ECU 108. In an embodiment, the ROM comprises eFuses of the IC of the ECU 108. Additionally, the ECU 108 is assigned a device key, and the device key is stored in a ROM of the IC of the ECU 108. In an embodiment, the ROM comprises eFuses. In an embodiment, the unique device ID and the device key are stored in a same ROM. In another embodiment, the unique device ID and the device key are stored in different respective ROMs.

As discussed above, the database 172 stores device IDs of authorized vehicle components. Additionally, the database 172 stores device keys of authorized vehicle components. The database 172 associates the device IDs with the respective device keys so that, for example, a device key of an authorized vehicle component can be looked up in the database 172 using the corresponding device ID of the authorized vehicle component. Additionally or alternatively, the database 172 associates the device IDs with the respective device keys so that a device ID of an authorized vehicle component can be looked up in the database 172 using the corresponding device key of the authorized vehicle component, in another embodiment.

The backend server 160 is configured to lookup device IDs and/or device keys in the database 172. Additionally, the backend server 160 is configured to generate keys for pairs of vehicle components that are to communicate with one another in an in-vehicle communication network, and to send the keys to the tester 140 for forwarding to the vehicle components. Such keys are for use in connection with secure communications between the vehicle components within the in-vehicle network, and are sometimes referred to as "binding keys," "connectivity association keys," or "CAKs." The binding keys are generated by any suitable technique, including currently known techniques and techniques yet to be developed, and the method by which the binding keys are generated is not critical. In an embodiment, the backend server 160 includes an HSM that is used to generate the binding keys.

In an embodiment, the binding key for use by a vehicle component is encrypted by the backend server 160 using the device key of the vehicle component. For example, the backend server 160 encrypts the binding key for use by the vehicle subsystem assembly 112 using the device key of the IC 124. Then, the backend server 160 sends the encrypted binding key to the tester 140, which forwards the encrypted binding key to the vehicle subsystem assembly 112, as will be described below. Upon receiving the encrypted binding key, the IC 124 decrypts the binding key using the device key and stores the binding key in a memory of the vehicle subsystem assembly 112.

In an embodiment, the communication network 104, the tester 140, the backend server 160, and the database 172 are located in one or more secure facilities when keys are transferred from the backend server 160 to the communication network 104. For example, physical access to the communication network 104, the tester 140, the backend server 160, and the database 172 is controlled so that physical access is limited to authorized personnel and unauthorized persons are not permitted physical access to the any of the communication network 104, the tester 140, the backend server 160, and the database 172. At least in embodiments in which the backend server 160 is remotely located from the tester 164, communications via the communication link 164 utilize security features such as encryption and/or authentication.

As will be described further below, the system 100 permits a key (such as a binding key) generated by the backend server 160 to be provided to the vehicle subsystem assembly 112 via the ECU 108 and the cable 116. Thus, the vehicle subsystem assembly 112 need not include another communication interface, separate from the Ethernet interface, capable of receiving the key from the tester 140, for example, as is typically required by conventional vehicle subsystem assemblies. Additionally, the vehicle subsystem assembly 112 need not include an HSM as is often required by at least some conventional vehicle subsystem assemblies. As a result, the IC 124 can be less complex (e.g., have less components, less processing power, less memory, etc.) as compared to ICs of conventional vehicle subsystem assemblies that are configured for secure Ethernet communications, and thus the IC 124 and/or the vehicle subsystem assembly 112 can be less expensive to manufacture as compared conventional vehicle subsystem assemblies that are configured for secure Ethernet communications.

In another embodiment, the ECU 108 and the vehicle subsystem assembly 112 are communicatively coupled via another communication link (e.g., an MDIO bus, an SPI bus, an I2C bus, etc., or another suitable communication link, not shown in Fig. 1) separate from the cable 116. In some such embodiments, a key (such as a binding key) generated by the backend server 160 is provided to the vehicle subsystem assembly 112 via the ECU 108 and the other communication link separate from the cable 116. For example, the IC 124 includes a memory device (e.g., one or more registers) that the ECU 108 is configured to write to and read from via the other communication link; and the ECU 108 provides a key to the IC 124 by writing to the memory device via the other communication link, according to an embodiment.

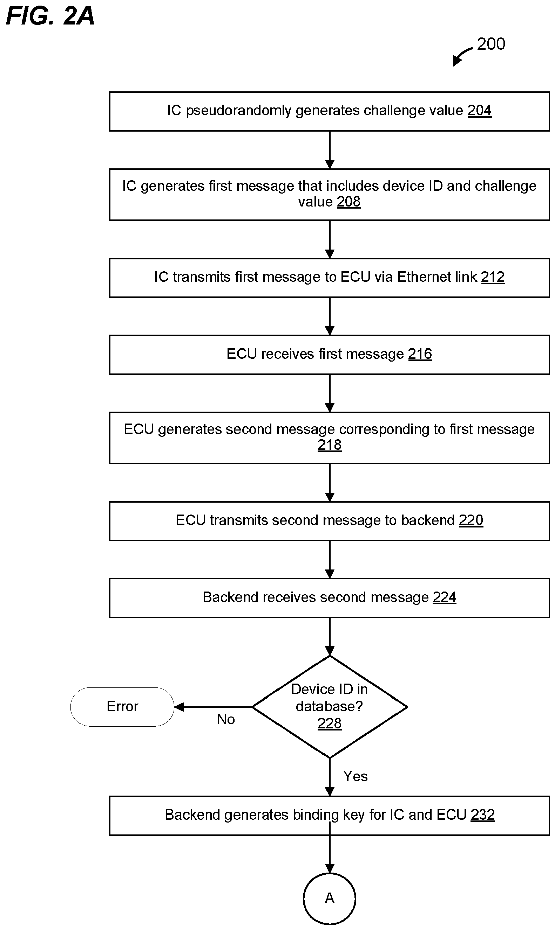

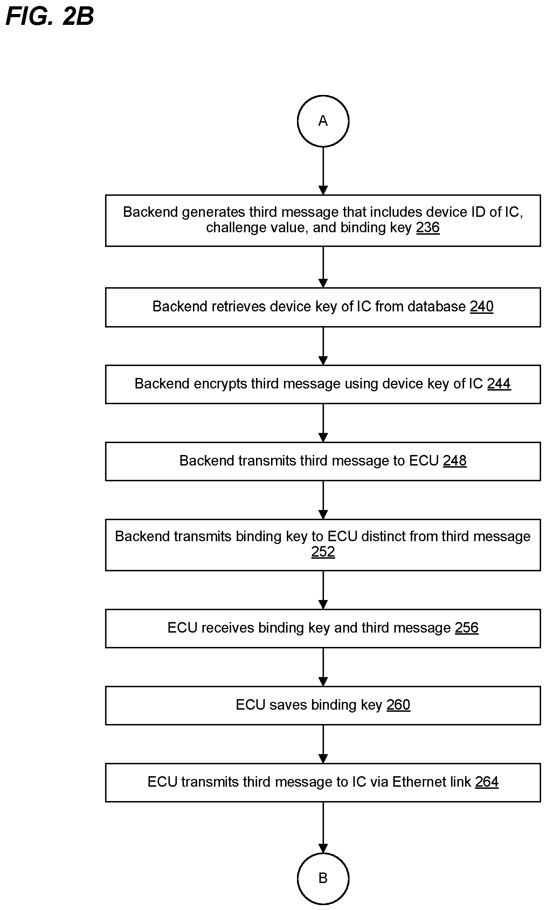

Figs. 2A-C are flow diagrams of an example method 200 for generating and distributing keys for use in secure communications within in-vehicle communication networks, according to an embodiment. The method 200 is implemented in the system 100 of Fig. 1, according to an embodiment, and the method 200 is described with reference to Fig. 1 for ease of explanation. In other embodiments, the method 200 is implemented in another suitable system different than the system 100. Also, in some embodiments, the system 100 implements another suitable method for generating and distributing keys for use in secure communications within in-vehicle communication networks different than the method 200.

At block 204, an IC randomly or pseudorandomly generates a challenge value related to obtaining a key for use in secure communications within an in-vehicle communication network. For example, the IC 124 generates (e.g., the controller of the IC 124 generates) the challenge value. In an embodiment, the key is for use in secure communications with another vehicular component (e.g., the ECU 108) within the in-vehicle communication network.

At block 208, the IC generate a first message that includes a device ID of the IC and the challenge value. The first message corresponds to a request for the key for use in secure communications within an in-vehicle communication network. For example, the IC 124 generates (e.g., the controller of the IC 124 generates) the first message.

At block 212, the IC sends the first message to another vehicular component within the in-vehicle communication network via a communication link between the IC and the other vehicular component. For example, the IC 124 controls the first communication interface of the vehicle subsystem assembly 112 (e.g., the controller of the IC 124 controls the Ethernet network interface of the IC 124) to transmit the first message via the cable 116. In another embodiment in which the ECU 108 and the IC 124 are communicatively coupled via another communication link separate from the cable 116, the IC 124 stores the first message in a memory of the IC 124 (e.g., one or more registers) that is accessible by the ECU 108 via the other communication link; and the ECU 108 retrieves the first message from the memory via the other communication link.

In an embodiment, the first message transmitted on the communication link at block 212 is unencrypted, and thus contents of the first message on the communication link can be viewed. However, the unencrypted first message is transmitted in a secure environment as discussed above, in an embodiment.

At block 216, the other vehicular component within the in-vehicle communication network (e.g., the ECU 108) receives the first message from the IC. At block 218, the other vehicular component (e.g., the ECU 108) generate a second message corresponding to the first message. For example, the second message is generated to include information from the first message, such as the device ID of the IC and the challenge value, in an embodiment. In another embodiment, the second message is generated to include the first message. In another embodiment, the second message is generated to also include a device ID corresponding to the other vehicular component (e.g., the ECU 108). In another embodiment, the second message is generated to also include the device ID corresponding to the other vehicular component (e.g., the ECU 108) and a challenge value generated by a processor of the other vehicular component (e.g., of the ECU 108). In another embodiment, the second message is generated to be a copy of the first message.

At block 220, the other vehicular component within the in-vehicle communication network (e.g., the ECU 108) transmits the second message to a backend server system. For example, the ECU 108 transmits the second message to the tester 140 via the communication link 144, and the tester 140 forwards the second message to the backend server 160 via the communication link 164. In an embodiment, the processor of the ECU 108 controls the second communication interface of the ECU 108 to transmit the second message via the communication link 144.

At block 224, the backend server system receives the second message from the other vehicular component within the in-vehicle communication network (e.g., the ECU 108). For example, the backend server 160 receives the second message from the tester 140 via the communication link 164.

At block 228, the backend server system performs a lookup in a database coupled to the backend server system using the device ID of the vehicle subsystem assembly in the second message, where the database stores device IDs of authorized vehicle components and corresponding device keys of the authorized vehicle components. For example, the backend server 160 performs a lookup in the database 172 using the device ID of the IC 124 in the second message.

In response to the backend server system determining that the device ID of the vehicle subsystem assembly in the second message is not included in the database, the backend server system determines that an error has occurred and the flow ends. For example, determining that the device ID of the vehicle subsystem assembly in the second message is not included in the database may indicate that the vehicle subsystem assembly is an unauthorized component, such as a counterfeit, a malicious device, etc.

On the other hand, in response to the backend server system determining that the device ID of the vehicle subsystem assembly in the second message is included in the database, the flow proceeds to block 232. At block 232, the backend server system generates a binding key for the vehicle subsystem assembly (e.g., the vehicle subsystem assembly 112) and the other vehicular component within the in-vehicle communication network (e.g., the ECU 108). The backend server system (e.g., the backend server 160) generates the binding key using any of various suitable techniques, in various embodiments. In an embodiment, an HSM of the backend server system generates the binding key.

In some embodiments in which the second message also includes another device ID of the other vehicular component (e.g., the ECU 108), the flow 200 also includes the backend server system performing another lookup in the database using the other device ID of the other vehicular component (e.g., the ECU 108). For example, the backend server 160 performs another lookup in the database 172 using the device ID of the ECU 108 in the second message. In response to the backend server system determining that the other device ID of the of the other vehicular component (e.g., the ECU 108) is not included in the database, the backend server system determines that an error has occurred and the flow ends. For example, determining that the device ID of the other vehicular component (e.g., the ECU 108) is not included in the database may indicate that the other vehicular component (e.g., the ECU 108) is an unauthorized component, such as a counterfeit, a malicious device, etc. On the other hand, in response to the backend server system determining that the device ID of the vehicle subsystem assembly and the device ID of the other vehicular component (e.g., the ECU 108) are both included in the database, the flow proceeds to block 232.

After block 232, the flow proceeds to block 236, at which the backend server system generates a third message that includes the device ID of the vehicle subsystem assembly, the challenge value from the first message, and the binding key generated at block 232. For example, a processor of the backend server 160 generates the third message.

At block 240, the backend server system retrieves the device key of the vehicle subsystem assembly from the database. For example, the database stores associations between device IDs of authorized components and respective device keys of the authorized components, and the backend server system retrieves the device key of the vehicle subsystem assembly from the database using the device ID of the vehicle subsystem assembly. In an embodiment, retrieving the device key of the vehicle subsystem assembly from the database corresponds to performing the lookup in the database described with reference to block 228. For example, in response to performing the lookup in the database described with reference to block 228, the database returns the device key of the vehicle subsystem assembly, in an embodiment. In an embodiment, the backend server 160 retrieves the device key from the database 172.

At block 244, the backend server system encrypts the third message generated at block 232 with the device key retrieved at block 240. For example, a processor of the backend server 160 encrypts the third message. In an embodiment, an HSM of the backend server system encrypts the third message.

At block 248, the backend server transmits the encrypted third message to the other vehicular component within the in-vehicle communication network (e.g., the ECU 108). For example, the backend server 160 transmits the second message to the tester 140 via the communication link 164, and the tester 140 forwards the third message to the ECU 108 via the communication link 144. In an embodiment, a processor of the backend server 160 controls the communication interface of the backend server 160 to transmit the third message via the communication link 164.

At block 252, the backend server transmits the binding key generated at block 232 to the other vehicular component (e.g., the ECU 108) distinct from the third message encrypted at block 244. For example, the backend server 160 transmits the binding key to the tester 140 via the communication link 164, and the tester 140 forwards the binding key to the ECU 108 via the communication link 144. In an embodiment, a processor of the backend server 160 controls the communication interface of the backend server 160 to transmit the binding key via the communication link 164.

In an embodiment, the method 200 further comprises the backend server system (e.g., the backend server 160) generating a fourth message that includes the binding key (and optionally the device ID of the ECU 108); retrieving a device key of the ECU 108 from the database 172, and using the device key of the ECU 108 to encrypt the fourth message; wherein transmitting the binding key to the ECU 108 at block 252 comprises transmitting the encrypted fourth message to the ECU 108.

At block 256, the other vehicular component (e.g., the ECU 108) receives i) the third message transmitted by the backend server system 160 at block 248, and ii) the binding key transmitted by the server system 160 at block 252. For example, the ECU 108 receives the third message and the binding key via the communication link 144.

At block 260, the other vehicular component (e.g., the ECU 108) stores the binding key received at block 256 in a memory of the vehicular component (e.g., a memory of the ECU 108). In an embodiment in which the fourth message is received by the ECU 108, the ECU 108 uses the device key of the ECU 108 to decrypt the fourth message and retrieves the binding key from the decrypted fourth message.

At block 264, the other vehicular component (e.g., the ECU 108) transmits the third message to the vehicle subsystem assembly via the communication link between the other vehicular component (e.g., the ECU 108) and the vehicle subsystem assembly. For example, the ECU 108 transmits the third message to the vehicle subsystem assembly 112 via the communication link 116. In an embodiment, the ECU 108 controls the first communication interface of the ECU 108 (e.g., the processor of the ECU 108 controls the Ethernet network interface of the ECU 108) to transmit the third message via the cable 116.

In another embodiment in which the ECU 108 and the IC 124 are communicatively coupled via another communication link separate from the cable 116, the ECU 108 stores the third message in a memory of the IC 124 (e.g., one or more registers) that is accessible by the ECU 108 via the other communication link.

In another embodiment, the other vehicular component (e.g., the ECU 108) stores the third message (received at block 256) in a non-volatile memory of the other vehicular component so that the other vehicular component can resend the third message to the vehicle subsystem assembly at a future time. For example, the other vehicular component (e.g., the ECU 108) is configured to retrieve the third message from the non-volatile memory in connection with a startup of the vehicle, a system reset, etc., and to resend the third message to the vehicle subsystem assembly in connection with the startup of the vehicle, the system reset, etc.

At block 268, the vehicle subsystem assembly receives the third message via the communication link 116. For example, the first communication interface (e.g., the Ethernet interface) of the IC 124 receives the third message via the cable 116. In another embodiment in which the ECU 108 stores the third message in the memory of the IC 124 (e.g., one or more registers) via the other communication link, the IC 124 retrieves the third message from the memory.

At block 272, the vehicle subsystem assembly decrypts the third message using the device key of the vehicle subsystem assembly. For example, decryption circuitry of the IC 124 decrypts the third message using the device key of the IC 124.

At block 276, the vehicle subsystem assembly determines whether the device ID in the decrypted third message matches the device ID of the vehicle subsystem assembly. For example, the controller of the IC 124 determines whether the device ID in the decrypted third message matches the device ID of the IC 124.

In response to the vehicle subsystem assembly determining that the device ID in the third message does not match the device ID of the vehicle subsystem assembly, the vehicle subsystem assembly determines that an error has occurred and the flow ends. For example, determining that the device ID in the third message does not match the device ID of the vehicle subsystem assembly may indicate that the third message came from or was modified by an unauthorized device, such as a malicious device.

On the other hand, in response to the vehicle subsystem assembly determining that device ID in the third message matches the device ID of the vehicle subsystem assembly, the flow proceeds to block 280. At block 280, the vehicle subsystem assembly determines whether the challenge value in the decrypted third message matches the challenge value included in the first message by the vehicle subsystem assembly. For example, the controller of the IC 124 determines whether the challenge value in the decrypted third message matches the challenge value included in the first message by the IC 124.

In response to the vehicle subsystem assembly determining that the challenge value in the third message does not match the challenge value included in the first message by the vehicle subsystem assembly, the vehicle subsystem assembly determines that an error has occurred and the flow ends. For example, determining that the challenge value in the third message does not match the challenge value included in the first message by the vehicle subsystem assembly may indicate that the third message came from or was modified by an unauthorized device, such as a malicious device.

On the other hand, in response to the vehicle subsystem assembly determining that the challenge value in the third message matches the challenge value included in the first message by the vehicle subsystem assembly, the flow proceeds to block 284. At block 284, the vehicle subsystem assembly stores the binding key in the third message in a memory of the vehicle subsystem assembly. For example, the controller of the IC 124 stores the binding key in the memory of the IC 124.

At block 288, the vehicle subsystem assembly uses the binding key in connection with communications with the other vehicular component via the communication link between the vehicle subsystem assembly and the other vehicular component. For example, the controller of the IC 124 uses the binding key in connection with communications with the ECU 108 via the communication link 116.

Similarly, at block 292, the other vehicular component uses the binding key in connection with communications with the vehicle subsystem assembly via the communication link. For example, the processor of the ECU 108 uses the binding key in connection with communications with the IC 124 via the communication link 116.

Using the binding key at blocks 288 and 292 includes using the binding key in connection with communications according to MACsec, in an embodiment.

In some embodiments, the ECU stores the third message received at block 256 in a non-volatile memory of the ECU. In some such embodiments, the ECU retrieves the third message from the memory and transmits the third message to the vehicle subsystem assembly via the communication link during a vehicle startup procedure. In some such embodiments, the vehicle subsystem assembly need not store the binding key in a non-volatile memory of the vehicle subsystem assembly, and thus a cost of the vehicle subsystem assembly can be further reduced. For example, storing the binding key at block 284 comprises storing the binding key in a volatile memory, in an embodiment. In another embodiment, storing the binding key at block 284 comprises storing the binding key in a non-volatile memory of the vehicle subsystem assembly so that the binding key is available to the vehicle subsystem assembly upon startup.

Referring now again to Fig. 1, the IC 124 is configured to process frames received via the Ethernet cable 116, and generate frames to be transmitted via the Ethernet cable 116, where the frames are encapsulated in Ethernet frames and conform to a suitable communication protocol. For example, the IC 124 is configured to process/generate frames that conform to Institute for Electrical and Electronics Engineers (IEEE) Standard 1722 Audio Video Transport Protocol (AVTP), a future version of the IEEE Standard 1722 protocol, a future protocol related to the IEEE Standard 1722 protocol, etc., according to some embodiments. As an illustrative example, the IC 124 generates IEEE Standard 1722 protocol frames that include sensor data, encapsulates the IEEE Standard 1722 protocol frames in Ethernet frames, and transmits the Ethernet frames to the ECU 108 via the cable 116, in an embodiment. As another illustrative example, the IC processes IEEE Standard 1722 protocol frames received from the ECU 108 via the cable 116 to retrieve control data received from the ECU 108. For instance, the communication protocol (e.g., the IEEE Standard 1722 protocol, the future version of the IEEE Standard 1722 protocol, the future protocol related to the IEEE Standard 1722 protocol, etc., another suitable communication protocol) defines one or more frame formats for communicating control data.

The ECU 108 is similarly configured to process/generate frames that conform to the communication protocol (e.g., the IEEE Standard 1722 protocol, the future version of the IEEE Standard 1722 protocol, the future protocol related to the IEEE Standard 1722 protocol, etc., another suitable communication protocol).

Referring now to Figs. 2A-C, generating the first message at block 208 comprises generating a frame that conforms to the communication protocol (e.g., the IEEE Standard 1722 protocol, the future version of the IEEE Standard 1722 protocol, the future protocol related to the IEEE Standard 1722 protocol, etc., another suitable communication protocol), the frame including the first message; and transmitting the first message at block 212 comprises transmitting the frame that conforms to the communication protocol, according to an embodiment. The method 200 further includes, in relation to block 216, the ECU processing the frame to extract the first message, in an embodiment.

Similarly, in relation to block 264, the method 200 includes generating a frame that conforms to the communication protocol (e.g., the IEEE Standard 1722 protocol, the future version of the IEEE Standard 1722 protocol, the future protocol related to the IEEE Standard 1722 protocol, etc., another suitable communication protocol), the frame including the third message; and transmitting the third message at block 264 comprises transmitting the frame that conforms to the communication protocol, according to an embodiment. The method 200 further includes, in relation to block 268, the IC processing the frame to extract the third message.

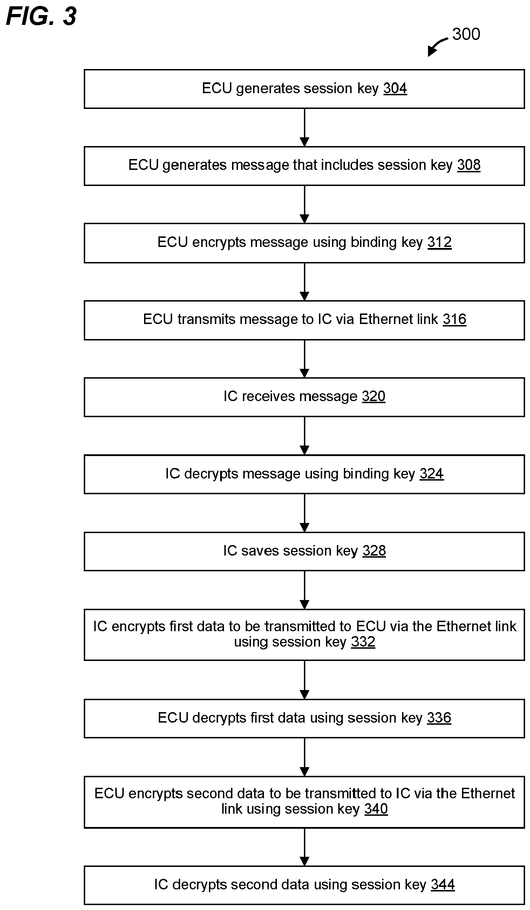

Fig. 3 is a flow diagram of an example method 300 for using a binding key in connection with communications between a vehicle subsystem assembly and an ECU via a communication link, according to an embodiment. The method 300 is implemented in the system 100 of Fig. 1, according to an embodiment, and the method 300 is described with reference to Fig. 1 for ease of explanation. In other embodiments, the method 300 is implemented in another suitable system different than the system 100. Also, in some embodiments, the system 100 implements another suitable method for using a binding key for use in secure communications within in-vehicle communication networks different than the method 300.

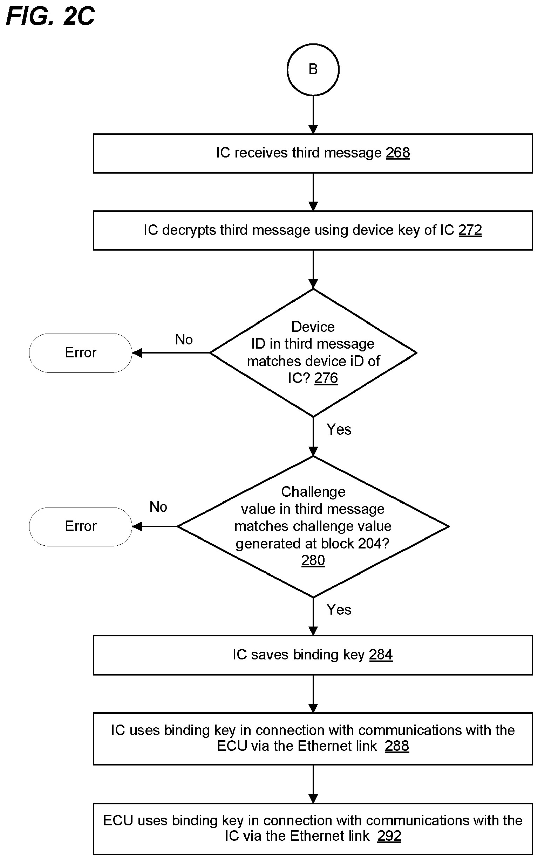

The method 300 is used in conjunction with blocks 288 and 292 of Fig. 2C, according to an embodiment. In other embodiments, however, the method 300 is implemented in connection with another suitable method different than the method 200 of Figs. 2A-C. Also, in some embodiments, the method 200 employs another suitable method for using a binding key for use in secure communications within in-vehicle communication networks different than the method 300.

At block 304, the ECU generates a session key (sometimes referred to as a "session association key" or "SAK"). The ECU employs any suitable technique for generating the session key at block 304. In an embodiment, the HSM of the ECU 108 generates the session key.

At block 308, the ECU generates a message that includes the session key generated at block 308. For example, the processor of the ECU 108 generates the message that includes the session key.

At block 312, the ECU encrypts the message generated at block 308 using the binding key. For example, encryption circuitry of the ECU 108 encrypts the message.

At block 316, the ECU transmits the encrypted message to the vehicle subsystem assembly via the communication link. For example, the processor of the ECU 108 controls the Ethernet interface of the ECU 108 to transmit the message to the IC 124 via the communication link 116. In another embodiment in which the ECU 108 and the IC 124 are communicatively coupled via another communication link separate from the cable 116, the ECU 108 stores the message in a memory of the IC 124 (e.g., one or more registers) that is accessible by the ECU 108 via the other communication link.

At block 320, the vehicle subsystem assembly receives the message via the communication link. For example, the Ethernet interface of the IC 124 receives the message. In another embodiment in which the ECU 108 stores the message in the memory of the IC 124 (e.g., one or more registers) via the other communication link, the IC 124 retrieves the message from the memory.

At block 324, the vehicle subsystem assembly decrypts the message using the binding key. For example, decryption circuitry of the IC 124 decrypts the message.

At block 328, the vehicle subsystem assembly extracts the session key from the decrypted message and stores the session key in a memory of the vehicle subsystem assembly. For example, controller of the IC 124 extracts the session key from the message and stores the session key in a memory of the IC 124.

At block 332, the vehicle subsystem assembly uses the session key to encrypt first data that is to be transmitted to the ECU via the communication link. For example, encryption circuitry of the IC 124 encrypts the first data using the session key. The vehicle subsystem assembly (e.g., the IC 124) transmits the encrypted first data to the ECU (e.g., the ECU 108) via the communication link (e.g., the Ethernet link 116).

At block 336, the ECU uses the session key to decrypt the first data received via the communication link. For example, decryption circuitry of the ECU 108 decrypts the first data using the session key. The Ethernet communication interface of the ECU 108 receives the encrypted first data via the Ethernet link 116, for example.

At block 340, the ECU uses the session key to encrypt second data that is to be transmitted to the vehicle subsystem assembly via the communication link. For example, encryption circuitry of the ECU 108 encrypts the second data using the session key. The ECU (e.g., the ECU 108) transmits the encrypted first data to the vehicle subsystem assembly (e.g., to the IC 124) via the communication link (e.g., the Ethernet link 116).

At block 344, the vehicle subsystem assembly uses the session key to decrypt the second data received via the communication link. For example, decryption circuitry of the IC 124 decrypts the second data using the session key. The vehicle subsystem assembly (e.g., the IC 124) receives the encrypted second data from the ECU (e.g., the ECU 108) via the communication link (e.g., the Ethernet link 116).

In another embodiment, the method 300 further includes, or blocks 332, 336, 340, and 344 are replaced by:
A) the vehicle subsystem assembly uses the session key to generate message authentication codes for third data that is to be transmitted to the ECU via the communication link. For example, circuitry of the IC 124 generate message authentication codes for the third data using the session key. The vehicle subsystem assembly (e.g., the IC 124) transmits the third data along with the message authentication codes to the ECU (e.g., the ECU 108) via the communication link (e.g., the Ethernet link 116).
B) the ECU uses the session key to authenticate the third data received via the communication link. For example, circuitry of the ECU 108 generates new message authentication codes using the third data and the session key, and determines whether the third data is authenticated based on comparing the new message authentication codes with the message authentication codes received with the third data. The Ethernet communication interface of the ECU 108 receives the third data and the message authentication codes via the Ethernet link 116, for example.
C) the ECU uses the session key to generate message authentication codes for fourth data that is to be transmitted to the vehicle subsystem assembly via the communication link. For example, circuitry of the ECU 108 generates message authentication codes for the second data using the session key. The ECU (e.g., the ECU 108) transmits the fourth data along with the message authentication codes to the vehicle subsystem assembly (e.g., to the IC 124) via the communication link (e.g., the Ethernet link 116).
D) the vehicle subsystem assembly uses the session key to authenticate the fourth data received via the communication link. For example, circuitry of the IC 124 generates new message authentication codes using the fourth data and the session key, and determines whether the fourth data is authenticated based on comparing the new message authentication codes with the message authentication codes received with the fourth data. The vehicle subsystem assembly (e.g., the IC 124) receives the fourth data and the message authentication codes via the Ethernet link 116, for example.

In an embodiment, in relation to block 316, the method 300 includes generating a frame that conforms to the communication protocol (e.g., the IEEE Standard 1722 protocol, the future version of the IEEE Standard 1722 protocol, the future protocol related to the IEEE Standard 1722 protocol, etc., another suitable communication protocol), the frame including the message; and transmitting the message at block 316 comprises transmitting the frame that conforms to the communication protocol, according to an embodiment. The method 300 further includes, in relation to block 320, the IC processing the frame to extract the message, in an embodiment.

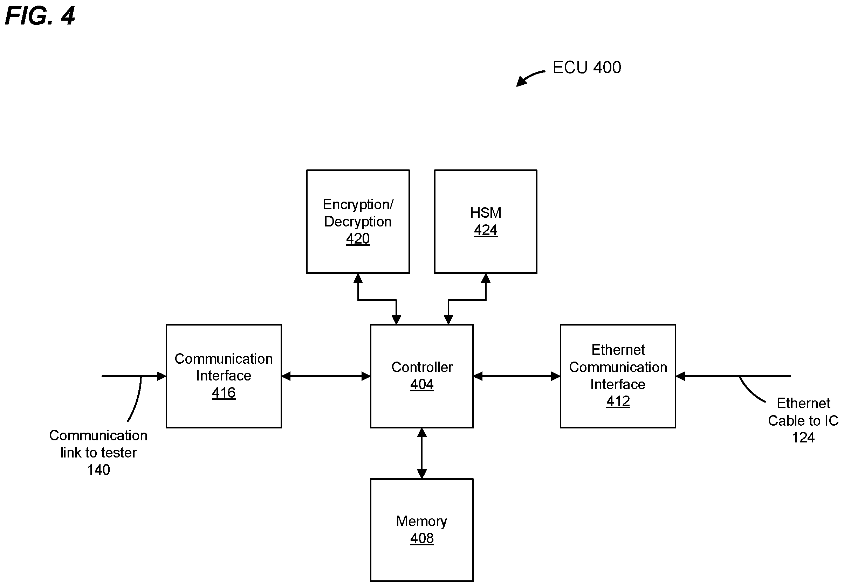

Fig. 4 is a simplified block diagram of an example ECU 400, according to an embodiment. The ECU 400 corresponds to the ECU 108 discussed above with reference to Figs. 1, 2A-C, and 3, in an embodiment. In other embodiments, the ECU 400 is used in another suitable system different than the system 100 of Fig. 1, and/or is used with another suitable method for generating and distributing keys different than the method 200, and/or is used with another suitable method for using a session key different than the method 300. Also, the ECU 108 has another suitable structure different than the ECU 400, in some embodiments. Additionally, the method 200 and/or the method 300 employ a suitable ECU different than the ECU 400, in some embodiments.

The ECU 400 includes a controller 404 that is coupled to a memory 408. In an embodiment, the controller 404 includes a processor that is configured to execute machine readable instructions stored in the memory 408 or another memory (not shown) of the ECU 400. The machine readable instructions, when executed by the processor, cause the processor to perform one or more acts of an ECU such as described above, and/or similar acts. In another embodiment, the controller 404 additionally or alternatively comprise a hardware state machine that is configured to perform one or more acts of an ECU such as described above, and/or similar acts.

In an embodiment, the processor 404 is configured to generate frames that conform to the communication protocol (e.g., the IEEE Standard 1722 protocol, the future version of the IEEE Standard 1722 protocol, the future protocol related to the IEEE Standard 1722 protocol, etc., another suitable communication protocol), and to encapsulate the frames in Ethernet frames for transmission via the Ethernet cable. In an embodiment, the processor 404 is configured to receive Ethernet frames via the Ethernet cable, extract frames that conform to the communication protocol (e.g., the IEEE Standard 1722 protocol, the future version of the IEEE Standard 1722 protocol, the future protocol related to the IEEE Standard 1722 protocol, etc., another suitable communication protocol) from the Ethernet frames, and process the frames.

The memory 408 includes one or more memory devices. The memory 408 stores a device ID of the ECU 400, in an embodiment. Additionally or alternatively, the memory 408 stores a device key of the ECU 400, in another embodiment.

The ECU 400 also includes an Ethernet communication interface 412 coupled to the controller 404. The Ethernet communication interface 412 is coupled to an Ethernet cable such as the cable 124 of Fig. 1. The Ethernet communication interface 412 is configured to perform Ethernet communications with a vehicle subsystem assembly via the Ethernet cable.

In an embodiment, the Ethernet communication interface 412 is configured to communicate via the cable 116 using asymmetric transmission rates. For example, data from the ECU 400 to the vehicle subsystem assembly 112 primarily includes control data at a first data rate, whereas data from the vehicle subsystem assembly 112 to the ECU 400 primarily includes sensor data at a second data rate significantly higher than the first data rate, in some embodiments.

The ECU 400 includes a communication interface 416 coupled to the controller 404. The communication interface 416 is coupled to a communication link such as the communication link 140 of Fig. 1. The communication interface 416 is configured to communicate with a computer system such as a tester via the communication link 140.

The ECU 400 comprises encryption/decryption circuitry 420 that is coupled to the controller 404. The encryption/decryption circuitry 420 is configured to i) encrypt data using keys such as a device key, a binding key, a session key, etc., and ii) decrypt data using keys such as a device key, a binding key, a session key, etc. In some embodiments, the encryption/decryption circuitry 420 is configured to generate message authentication codes using keys. In another embodiment, the ECU 400 additionally or alternatively comprises authentication circuitry configured to generate message authentication codes using keys.

The ECU 400 comprises an HSM 424 coupled to the controller 404. The HSM 424 comprises a hardened, tamper-resistant hardware device that is configured to generate, protect, and manage keys (e.g., a device key, binding keys, session keys, etc.) used, for example, for encrypting and decrypting data, generating message authentication codes, etc., according to an embodiment. In various embodiments, one or more of the device key of the ECU 400, the binding key, and/or session keys are stored in the HSM 424.

In another embodiment in which the ECU 400 is configured to communicatively couple to a vehicle subsystem assembly via another communication link (e.g., an MDIO bus, an SPI bus, an I2C bus, etc., or another suitable communication link, not shown in Fig. 4) separate from the Ethernet cable, the ECU 400 includes another communication interface (not shown) that includes circuitry configured to communicate via the other communication link. In some such embodiments, the other communication interface is configured to write to and/or read from a memory device (e.g., one or more registers) of the vehicle subsystem assembly via the other communication link separate from the Ethernet link.

In an embodiment, one or more components of the ECU 400 are included on an SoC. In another embodiment, two or more components of the ECU 400 additionally or alternatively are included on separate ICs in a multi-chip module. In another embodiment, two or more components of the ECU 400 additionally or alternatively are included on separate ICs mounted on a PCB. In another embodiment, one or more of the components of the ECU 400 are included on one or more of i) one or more ICs, ii) one or more SoCs, iii) one or more multi-chip modules mounted on a PCB, and one or more other components of the ECU 400 not shown in Fig. 4 (e.g., connectors, analog components, etc.) are mounted on the PCB. In another embodiment, the ECU 400 includes multiple PCBs with different sets of components mounted on respective PCBs. The one or more PCBs are included in a housing, in an embodiment.

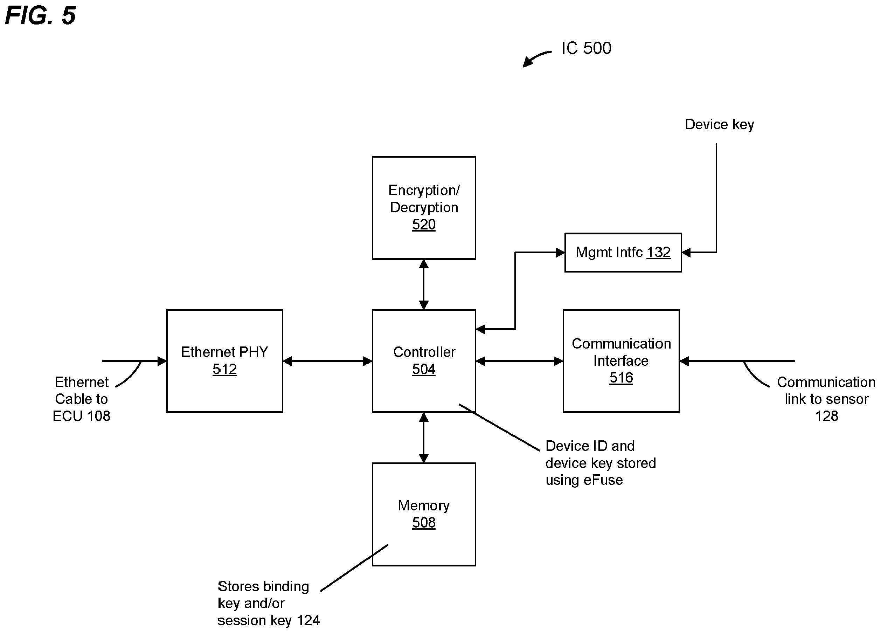

Fig. 5 is a simplified block diagram of an example IC 500 of a vehicle subsystem assembly, according to an embodiment. The IC 500 corresponds to the IC 124 discussed above with reference to Figs. 1, 2A-C, and 3, in an embodiment. In other embodiments, the IC 500 is used in another suitable system different than the system 100 of Fig. 1, and/or is used with another suitable method for generating and distributing keys different than the method 200, and/or is used with another suitable method for using a session key different than the method 300. Also, the IC 124 has another suitable structure different than the IC 500, in some embodiments. Additionally, the method 200 and/or the method 300 employ a suitable IC different than the IC 500, in some embodiments.

The IC 500 includes a controller 504 that is coupled to a memory 508. In an embodiment, the controller 504 includes a processor that is configured to execute machine readable instructions stored in the memory 508 or another memory (not shown) of the IC 500. The machine readable instructions, when executed by the processor, cause the processor to perform one or more acts of a vehicle subsystem assembly such as described above, and/or similar acts. In another embodiment, the controller 504 additionally or alternatively comprise a hardware state machine that is configured to perform one or more acts of a vehicle subsystem assembly such as described above, and/or similar acts.

In an embodiment, the processor 504 is configured to generate frames that conform to the communication protocol (e.g., the IEEE Standard 1722 protocol, the future version of the IEEE Standard 1722 protocol, the future protocol related to the IEEE Standard 1722 protocol, etc., another suitable communication protocol), and to encapsulate the frames in Ethernet frames for transmission via the Ethernet cable. In an embodiment, the processor 504 is configured to receive Ethernet frames via the Ethernet cable, extract frames that conform to the communication protocol (e.g., the IEEE Standard 1722 protocol, the future version of the IEEE Standard 1722 protocol, the future protocol related to the IEEE Standard 1722 protocol, etc., another suitable communication protocol) from the Ethernet frames, and process the frames.

The memory 508 includes one or more memory devices. The memory 508 stores a device ID of the IC 500, in an embodiment. Additionally or alternatively, the memory 508 stores a device key of the IC 500, in another embodiment. Additionally or alternatively, the memory 508 stores a binding key, in another embodiment. Additionally or alternatively, the memory 508 stores session keys, in another embodiment.

In other embodiments, the device ID of the IC 500 and/or the device key of the IC 500 are stored as eFuses that are included in the controller 504. In other embodiments, the device ID of the IC 500 and/or the device key of the IC 500 are stored as eFuses that are separate from the controller 504.

The IC 500 also includes an Ethernet communication interface 512 coupled to the controller 504. The Ethernet communication interface 512 is coupled to an Ethernet cable such as the cable 124 of Fig. 1. The Ethernet communication interface 512 is configured to perform Ethernet communications with an ECU via the Ethernet cable.

In an embodiment, the Ethernet communication interface 512 is configured to communicate via the cable 116 using asymmetric transmission rates. For example, data from the ECU 108 to the IC 500 primarily includes control data at a first data rate, whereas data from the IC 500 to the ECU 108 primarily includes sensor data at a second data rate significantly higher than the first data rate, in some embodiments.

The IC 500 includes a communication interface 516 coupled to the controller 504. The communication interface 516 is coupled to one or more sensors such as the sensor 128 of Fig. 1. The communication interface 516 is configured to communicate with the one or more sensors.

In another embodiment, the communication interface 516 additionally or alternatively is coupled to one or more actuators, and the communication interface 516 is configured to convey control signals from the processor 504 to the one or more actuators. In another embodiment, the communication interface 516 additionally or alternatively is coupled to one or more electrical components, and the communication interface 516 is configured to convey control signals from the processor 504 to the one or more electrical components.

The IC 500 comprises encryption/decryption circuitry 520 that is coupled to the controller 504. The encryption/decryption circuitry 520 is configured to i) encrypt data using keys such as a device key, a binding key, a session key, etc., and ii) decrypt data using keys such as a device key, a binding key, a session key, etc. In some embodiments, the encryption/decryption circuitry 520 is configured to generate message authentication codes using keys. In another embodiment, the IC 500 additionally or alternatively comprises authentication circuitry configured to generate message authentication codes using keys.

In another embodiment in which the IC 500 is configured to communicatively couple to the ECU via another communication link (e.g., an NMIO bus, an SPI bus, an I2C bus, etc., or another suitable communication link, not shown in Fig. 5) separate from the Ethernet cable, the IC 500 includes another communication interface (not shown) that includes circuitry configured to communicate via the other communication link. In some such embodiments, the other communication interface is configured to facilitate the ECU writing to and/or reading from a memory device (e.g., one or more registers) of the IC 500 via the other communication link separate from the Ethernet cable.

In another embodiment, two or more components illustrated in Fig. 5 are included on separate ICs in a multi-chip module. In another embodiment, two or more components illustrated in Fig. 5 additionally or alternatively are included on separate ICs mounted on respective PCBs. The one or more PCBs are included in a housing, in an embodiment.

In some embodiments, a processing power of the controller 504 is significantly less as compared to a processing power of the controller 404 of the ECU 404. For example, the controller 504 is implemented as a hardware state machine, whereas the controller 404 of the ECU 400 is implemented using a processor that executes machine readable instructions. As another example, keys, device IDs, challenge values, etc., are exchanged with the ECU via frames that conform to a communication protocol (e.g., the IEEE Standard 1722 protocol, the future version of the IEEE Standard 1722 protocol, the future protocol related to the IEEE Standard 1722 protocol, etc., another suitable communication protocol), according to which the controller 504 is already configured to operate in order to exchange sensor data, control data, etc., with the ECU, according to an embodiment. This facilitates keeping the complexity of the controller 504 significantly lower as compared to the controller 404 of the ECU 400, in some embodiments.

Additionally, the IC 500 omits an HSM like the HSM 424 of the ECU 400. Additionally or alternatively, the memory 508 is significantly smaller than the memory 408 of the ECU 400, in an embodiment.

In an embodiment, the IC 500 omits a communication interface for communicating with a computer such as the tester 140, or the communication interface of the IC 500 for communicating with the tester 140 is significantly less complex than the communication interface 416 of the ECU 400.

As a result of one or more of the differences between the IC 500 and the ECU 400 discussed above, the IC 500 is significantly less expensive than the ECU 400, at least in some embodiments.

Embodiment 1: A method in a system that comprises i) a backend system that provides keys for symmetric encryption in vehicles, ii) an electronic control unit (ECU) communicatively coupled to the backend system, and iii) a vehicle subsystem assembly communicatively coupled to the ECU via an Ethernet link, the method comprising: transmitting, by the vehicle subsystem assembly, a first identifier of the vehicle subsystem assembly to the ECU via the Ethernet link as part of a procedure for obtaining, from the backend system, a first key for secure communications with the ECU via the Ethernet link; after transmitting the first identifier of the vehicle subsystem assembly to the ECU, receiving, at the vehicle subsystem assembly, a first encrypted message from the ECU via the Ethernet link as part of the procedure for obtaining the first key; decrypting, at the vehicle subsystem assembly, the first encrypted message using a second key stored at the vehicle subsystem assembly to generate a first decrypted message; determining, at the vehicle subsystem assembly, whether the first decrypted message includes a second identifier that matches the first identifier; extracting, at the vehicle subsystem assembly, the first key from the decrypted message; and in response to determining that the decrypted message includes the second identifier that matches the first identifier, using, at the vehicle subsystem assembly, the first key in connection with secure communications between the vehicle subsystem assembly and the ECU.

Embodiment 2: The method of embodiment 1, further comprising: randomly or pseudorandomly generating, at the vehicle subsystem assembly, a challenge number; transmitting, by the vehicle subsystem assembly, the challenge number to the ECU via the Ethernet link in connection with transmitting the first identifier to the ECU as part of the procedure for obtaining the first key; and determining, at the vehicle subsystem assembly, whether the decrypted message includes the challenge number; wherein using the first key in connection with secure communications between the vehicle subsystem assembly and the ECU is further in response to determining that the decrypted message includes the challenge number.

Embodiment 3: The method of either of embodiments 1 or 2, further comprising: after receiving the first encrypted message, receiving, at the vehicle subsystem assembly, a second encrypted message from the ECU via the Ethernet link; wherein using the first key in connection with secure communications between the vehicle subsystem assembly and the ECU comprises: using, at the vehicle subsystem assembly, the first key to decrypt the second encrypted message to generate a second decrypted message, extracting, at the vehicle subsystem assembly, a third key from the decrypted message, and using, at the vehicle subsystem assembly, the third key to encrypt data to be transmitted to the ECU via the Ethernet link.

Embodiment 4: The method of embodiment 3, wherein using the first key in connection with secure communications between the vehicle subsystem assembly and the ECU further comprises: using, at the vehicle subsystem assembly, the third key to decrypt data received from the ECU via the Ethernet link.

Embodiment 5: The method of any of embodiments 1-4, wherein the ECU and the vehicle subsystem assembly are included within an in-vehicle communication network.

Embodiment 6: An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising: an Ethernet communication interface configured to communicate with the ECU via the Ethernet link; a memory configured to store a first identifier of the vehicle subsystem assembly and a first key; decryption circuitry; and a controller coupled to i) the Ethernet communication interface, ii) the memory, and iii) the decryption circuitry. The controller is configured to: control the Ethernet communication interface to transmit the first identifier of the vehicle subsystem assembly to the ECU via the Ethernet link as part of a procedure for obtaining, from the backend system, a second key for secure communications with the ECU via the Ethernet link; after the Ethernet communication interface transmits the first identifier, receive a first encrypted message from the ECU via the Ethernet link and the Ethernet communication interface as part of the procedure for obtaining the second key; control the decryption circuitry to decrypt the first encrypted message using the first key to generate a first decrypted message; determine whether the first decrypted message includes a second identifier that matches the first identifier; extract the second key from the decrypted message; and in response to determining that the decrypted message includes the second identifier that matches the first identifier, use the second key in connection with secure communications between the vehicle subsystem assembly and the ECU.

Embodiment 7: The apparatus of embodiment 6, wherein the controller is further configured to: randomly or pseudorandomly generate a challenge number; control the Ethernet communication interface to transmit the challenge number to the ECU via the Ethernet link in connection with transmitting the first identifier to the ECU as part of the procedure for obtaining the first key; and determine whether the decrypted message includes the challenge number; use the second key in connection with secure communications between the vehicle subsystem assembly and the ECU further in response to determining that the decrypted message includes the challenge number.

Embodiment 8: The apparatus of either of embodiments 6 or 7, further comprising encryption circuitry coupled to the controller, wherein the controller is further configured to: after receiving the first encrypted message, receive a second encrypted message from the ECU via the Ethernet link and via the Ethernet communication link; and as part of using the second key in connection with secure communications between the vehicle subsystem assembly and the ECU: control the decryption circuity to decrypt the second encrypted message using the second key to generate a second decrypted message, extract a third key from the decrypted message, and control the encryption circuity to encrypt data to be transmitted to the ECU via the Ethernet link using the third key.

Embodiment 9: The apparatus of embodiment 8, wherein the controller is further configured to, as part of using the second key in connection with secure communications between the vehicle subsystem assembly and the ECU: control the decryption circuitry to decrypt data received from the ECU via the Ethernet link using the third key.

Embodiment 10: The apparatus of any of embodiments 6-9, wherein the ECU and the vehicle subsystem assembly are included within an in-vehicle communication network.

Embodiment 11: A method in a system that comprises i) a backend system that provides keys for symmetric encryption in vehicles, ii) an electronic control unit (ECU) communicatively coupled to the backend system via a secure communication link, and iii) a vehicle subsystem assembly communicatively coupled to the ECU via an Ethernet link distinct from the secure communication link, the method comprising: receiving, at the ECU, a first identifier of the vehicle subsystem assembly from the vehicle subsystem assembly via the Ethernet link as part of a procedure for i) obtaining a first key for secure communications with the vehicle subsystem assembly via the Ethernet link and ii) providing the first key to the vehicle subsystem assembly; transmitting, by the ECU, the first identifier to the backend system via the secure communication link as part of the procedure for i) obtaining the first key and ii) providing the first key to the vehicle subsystem assembly; in response to transmitting the first identifier to the backend system, receiving, at the ECU, the first key as part of the procedure for i) obtaining the first key and ii) providing the first key to the vehicle subsystem assembly; in response to transmitting the first identifier to the backend system, receiving, at the ECU, a first encrypted message as part of the procedure for i) obtaining the first key and ii) providing the first key to the vehicle subsystem assembly, the first encrypted message including the first key; transmitting, by the ECU, the first encrypted message to the vehicle subsystem assembly via the Ethernet link as part of the procedure for i) obtaining the first key and ii) providing the first key to the vehicle subsystem assembly; and using, at the ECU, the first key in connection with secure communications between the ECU and the vehicle subsystem assembly.

Embodiment 12: The method of embodiment 11, wherein using the first key in connection with secure communications between the ECU and the vehicle subsystem assembly comprises: generating, at the ECU, a second key; using, at the ECU, the first key to generate a second encrypted message that includes the second key; transmitting, by the ECU, the second encrypted message to the vehicle subsystem assembly via the Ethernet link; and using, at the ECU, the second key to decrypt data received from the vehicle subsystem assembly via the Ethernet link.

Embodiment 13: The method of embodiment 12, wherein using the first key in connection with secure communications between the ECU and the vehicle subsystem assembly further comprises: using, at the ECU, the second key to encrypt data to be transmitted to the vehicle subsystem assembly via the Ethernet link.

Embodiment 14: The method of any of embodiments 11-13, wherein: receiving the first key comprises receiving the first key in a second encrypted message from the backend system; and the method further comprises decrypting, at the ECU, the second encrypted message using a second key stored in an memory of the ECU.

Embodiment 15: The method of any of embodiments 11-14, wherein the ECU and the vehicle subsystem assembly are included within an in-vehicle communication network.

Embodiment 16: An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising: an Ethernet communication interface configured to communicate with the ECU via the Ethernet link; another communication interface configured to communicate with a computer system separate from the vehicle subsystem assembly, the computer system being communicatively coupled to the backend system; a memory; and a controller coupled to i) the Ethernet communication interface, ii) the other communication interface, and iii) the memory. The controller is configured to: receive a first identifier of the vehicle subsystem assembly from the vehicle subsystem assembly via the Ethernet link and the Ethernet communication interface as part of a procedure for i) obtaining a first key for secure communications with the vehicle subsystem assembly via the Ethernet link and ii) providing the first key to the vehicle subsystem assembly; control the other communication interface to transmit the first identifier to the computer system as part of the procedure for i) obtaining the first key and ii) providing the first key to the vehicle subsystem assembly; in response to transmitting the first identifier to the computer system, receive the first key from the backend system via the other communication interface as part of the procedure for i) obtaining the first key and ii) providing the first key to the vehicle subsystem assembly; store the first key in the memory; in response to transmitting the first identifier to the computer system, receive a first encrypted message from the backend system via the other communication interface as part of the procedure for i) obtaining the first key and ii) providing the first key to the vehicle subsystem assembly, the first encrypted message including the first key; control the Ethernet communication interface to transmit the first encrypted message to the vehicle subsystem assembly via the Ethernet link as part of the procedure for i) obtaining the first key and ii) providing the first key to the vehicle subsystem assembly; and use the first key in connection with secure communications between the ECU and the vehicle subsystem assembly.

Embodiment 17: The apparatus of embodiment 16, further comprising encryption circuitry and decryption circuitry, wherein the controller is configured to, as part of using the first key in connection with secure communications between the ECU and the vehicle subsystem assembly: generate a second key; control the encryption circuitry to use the first key to generate a second encrypted message that includes the second key; control the Ethernet communication interface to transmit the second encrypted message to the vehicle subsystem assembly via the Ethernet link; and control the decryption circuitry to decrypt data received from the vehicle subsystem assembly via the Ethernet link using the second key.

Embodiment 18: The apparatus of embodiment 17, wherein the controller is configured to, as part of using the first key in connection with secure communications between the ECU and the vehicle subsystem assembly: control the encryption circuitry to encrypt data to be transmitted to the vehicle subsystem assembly via the Ethernet link using the second key.

Embodiment 19: The apparatus of any of embodiments 16-18, further comprising decryption circuitry, wherein the controller is further configured to: receive the first key in a second encrypted message from the backend system; and control the decryption circuitry to decrypt the second encrypted message using a second key stored in the memory.

Embodiment 20: The apparatus of any of embodiments 16-19, wherein the ECU and the vehicle subsystem assembly are included within an in-vehicle communication network.

Embodiment 21: A method in a system that comprises i) a backend system that provides keys for symmetric encryption in vehicles, ii) an electronic control unit (ECU) communicatively coupled to the backend system via a secure communication link, and iii) a vehicle subsystem assembly communicatively coupled to the ECU via an Ethernet link distinct from the secure communication link, the method comprising: receiving, at the backend system, a first identifier of the vehicle subsystem assembly from the ECU via the secure communication link as part of a procedure for providing a first key for secure communications between the ECU and the vehicle subsystem assembly via the Ethernet link; determining, at the backend system, whether the first identifier is included in a database of identifiers of authorized vehicle components; and in response to determining that the first identifier is included in the database: retrieving from the database a second key corresponding to the first identifier, using, at the backend system, the second key to generate an encrypted message that includes the first key, the encrypted message intended for the vehicle subsystem assembly, and transmitting, by the backend system, the encrypted message to the ECU via the secure communication link for forwarding to the vehicle subsystem assembly by the ECU via the Ethernet link.

Embodiment 22: The method of embodiment 21, further comprising: in response to determining that the first identifier is included in the database, transmitting, by the backend system, the first key to the ECU via the secure communication link distinct from the encrypted message.

Embodiment 23: A backend server system in a system that further comprises i) an electronic control unit (ECU) communicatively coupled to the backend server system via a secure communication link, and ii) a vehicle subsystem assembly communicatively coupled to the ECU via an Ethernet link distinct from the secure communication link, the backend server system comprising: a communication interface communicatively coupled to the secure communication link; one or more processors; and one or more memories coupled to the one or more processors. The one or more memories store machine readable instructions that, when executed by the one or more processors, cause the one or more processors to: receive a first identifier of the vehicle subsystem assembly from the ECU via the secure communication link and via the communication interface as part of a procedure for providing a first key for secure communications between the ECU and the vehicle subsystem assembly via the Ethernet link; determine whether the first identifier is included in a database of identifiers of authorized vehicle components; and, in response to determining that the first identifier is included in the database: retrieve from the database a second key corresponding to the first identifier, use the second key to generate an encrypted message that includes the first key, the encrypted message intended for the vehicle subsystem assembly, and transmit the encrypted message to the ECU via the communication interface and via the secure communication link for forwarding to the vehicle subsystem assembly by the ECU via the Ethernet link.

Embodiment 24: The backend server system of embodiment 23, wherein the one or more memories further store machine readable instructions that, when executed by the one or more processors, cause the one or more processors to: in response to determining that the first identifier is included in the database, transmit the first key to the ECU via the communication interface and via the secure communication link distinct from the encrypted message.

Embodiment 25: The backend server system of either of embodiments 23 or 24, further comprising encryption circuitry coupled to the processor, wherein the one or more memories further store machine readable instructions that, when executed by the one or more processors, cause the one or more processors to: use the encryption circuitry to generate the encrypted message.

Embodiment 26: The backend server system of any of embodiments 23-25, further comprising: the database.

Some of the various blocks, operations, and techniques described above may be implemented utilizing hardware, a processor executing firmware instructions, a processor executing software instructions, or any suitable combination thereof. When implemented utilizing a processor executing software or firmware instructions, the software or firmware instructions may be stored in any suitable computer readable memory. The software or firmware instructions may include machine readable instructions that, when executed by one or more processors, cause the one or more processors to perform various acts such as described above.

When implemented in hardware, the hardware may comprise one or more of discrete components, an integrated circuit, an application-specific integrated circuit (ASIC), a programmable logic device (PLD), etc.

While the present invention has been described with reference to specific examples, which are intended to be illustrative only and not to be limiting of the invention, changes, additions and/or deletions may be made to the disclosed embodiments without departing from the scope of the invention.

**The following is a list of further preferred embodiments of the invention:**
Embodiment 1: A method in a system that comprises i) a backend system that provides keys for symmetric encryption in vehicles, ii) an electronic control unit (ECU) communicatively coupled to the backend system, and iii) a vehicle subsystem assembly communicatively coupled to the ECU via an Ethernet link, the method comprising:
   transmitting, by the vehicle subsystem assembly, a first identifier of the vehicle subsystem assembly to the ECU via the Ethernet link as part of a procedure for obtaining, from the backend system, a first key for secure communications with the ECU via the Ethernet link;
   after transmitting the first identifier of the vehicle subsystem assembly to the ECU, receiving, at the vehicle subsystem assembly, a first encrypted message from the ECU via the Ethernet link as part of the procedure for obtaining the first key;
   decrypting, at the vehicle subsystem assembly, the first encrypted message using a second key stored at the vehicle subsystem assembly to generate a first decrypted message;
   determining, at the vehicle subsystem assembly, whether the first decrypted message includes a second identifier that matches the first identifier;
   extracting, at the vehicle subsystem assembly, the first key from the decrypted message; and
   in response to determining that the decrypted message includes the second identifier that matches the first identifier, using, at the vehicle subsystem assembly, the first key in connection with secure communications between the vehicle subsystem assembly and the ECU.
Embodiment 2: The method of embodiment 1, further comprising:
   randomly or pseudorandomly generating, at the vehicle subsystem assembly, a challenge number;
   transmitting, by the vehicle subsystem assembly, the challenge number to the ECU via the Ethernet link in connection with transmitting the first identifier to the ECU as part of the procedure for obtaining the first key; and
   determining, at the vehicle subsystem assembly, whether the decrypted message includes the challenge number;
   wherein using the first key in connection with secure communications between the vehicle subsystem assembly and the ECU is further in response to determining that the decrypted message includes the challenge number.
Embodiment 3: The method of embodiment 1, further comprising:
   after receiving the first encrypted message, receiving, at the vehicle subsystem assembly, a second encrypted message from the ECU via the Ethernet link;
   wherein using the first key in connection with secure communications between the vehicle subsystem assembly and the ECU comprises:
      using, at the vehicle subsystem assembly, the first key to decrypt the second encrypted message to generate a second decrypted message,
      extracting, at the vehicle subsystem assembly, a third key from the decrypted message, and
      using, at the vehicle subsystem assembly, the third key to encrypt data to be transmitted to the ECU via the Ethernet link.
Embodiment 4: The method of embodiment 3, wherein using the first key in connection with secure communications between the vehicle subsystem assembly and the ECU further comprises:
   using, at the vehicle subsystem assembly, the third key to decrypt data received from the ECU via the Ethernet link.
Embodiment 5: The method of embodiment 1, wherein the ECU and the vehicle subsystem assembly are included within an in-vehicle communication network.
Embodiment 6: An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising:
   an Ethernet communication interface configured to communicate with the ECU via the Ethernet link;
   a memory configured to store a first identifier of the vehicle subsystem assembly and a first key;
   decryption circuitry; and
   a controller coupled to i) the Ethernet communication interface, ii) the memory, and iii) the decryption circuitry, the controller configured to:
      control the Ethernet communication interface to transmit the first identifier of the vehicle subsystem assembly to the ECU via the Ethernet link as part of a procedure for obtaining, from the backend system, a second key for secure communications with the ECU via the Ethernet link,
      after the Ethernet communication interface transmits the first identifier, receive a first encrypted message from the ECU via the Ethernet link and the Ethernet communication interface as part of the procedure for obtaining the second key,
      control the decryption circuitry to decrypt the first encrypted message using the first key to generate a first decrypted message,
      determine whether the first decrypted message includes a second identifier that matches the first identifier,
         extract the second key from the decrypted message, and
      in response to determining that the decrypted message includes the second identifier that matches the first identifier, use the second key in connection with secure communications between the vehicle subsystem assembly and the ECU.
Embodiment 7: The apparatus of embodiment 6, wherein the controller is further configured to:
   randomly or pseudorandomly generate a challenge number;
   control the Ethernet communication interface to transmit the challenge number to the ECU via the Ethernet link in connection with transmitting the first identifier to the ECU as part of the procedure for obtaining the first key; and
   determine whether the decrypted message includes the challenge number;
   use the second key in connection with secure communications between the vehicle subsystem assembly and the ECU further in response to determining that the decrypted message includes the challenge number.
Embodiment 8: The apparatus of embodiment 6, further comprising encryption circuitry coupled to the controller, wherein the controller is further configured to:
   after receiving the first encrypted message, receive a second encrypted message from the ECU via the Ethernet link and via the Ethernet communication link; and
   as part of using the second key in connection with secure communications between the vehicle subsystem assembly and the ECU:
      control the decryption circuity to decrypt the second encrypted message using the second key to generate a second decrypted message,
         extract a third key from the decrypted message, and
      control the encryption circuity to encrypt data to be transmitted to the ECU via the Ethernet link using the third key.
Embodiment 9: The apparatus of embodiment 8, wherein the controller is further configured to, as part of using the second key in connection with secure communications between the vehicle subsystem assembly and the ECU:
   control the decryption circuitry to decrypt data received from the ECU via the Ethernet link using the third key.
Embodiment 10: The apparatus of embodiment 6, wherein the ECU and the vehicle subsystem assembly are included within an in-vehicle communication network.
Embodiment 11: A method in a system that comprises i) a backend system that provides keys for symmetric encryption in vehicles, ii) an electronic control unit (ECU) communicatively coupled to the backend system via a secure communication link, and iii) a vehicle subsystem assembly communicatively coupled to the ECU via an Ethernet link distinct from the secure communication link, the method comprising:
   receiving, at the ECU, a first identifier of the vehicle subsystem assembly from the vehicle subsystem assembly via the Ethernet link as part of a procedure for i) obtaining a first key for secure communications with the vehicle subsystem assembly via the Ethernet link and ii) providing the first key to the vehicle subsystem assembly;
   transmitting, by the ECU, the first identifier to the backend system via the secure communication link as part of the procedure for i) obtaining the first key and ii) providing the first key to the vehicle subsystem assembly;
   in response to transmitting the first identifier to the backend system, receiving, at the ECU, the first key as part of the procedure for i) obtaining the first key and ii) providing the first key to the vehicle subsystem assembly;
   in response to transmitting the first identifier to the backend system, receiving, at the ECU, a first encrypted message as part of the procedure for i) obtaining the first key and ii) providing the first key to the vehicle subsystem assembly, the first encrypted message including the first key;
   transmitting, by the ECU, the first encrypted message to the vehicle subsystem assembly via the Ethernet link as part of the procedure for i) obtaining the first key and ii) providing the first key to the vehicle subsystem assembly; and
   using, at the ECU, the first key in connection with secure communications between the ECU and the vehicle subsystem assembly.
Embodiment 12: The method of embodiment 11, wherein using the first key in connection with secure communications between the ECU and the vehicle subsystem assembly comprises:
   generating, at the ECU, a second key;
   using, at the ECU, the first key to generate a second encrypted message that includes the second key;
   transmitting, by the ECU, the second encrypted message to the vehicle subsystem assembly via the Ethernet link; and
   using, at the ECU, the second key to decrypt data received from the vehicle subsystem assembly via the Ethernet link.
Embodiment 13: The method of embodiment 12, wherein using the first key in connection with secure communications between the ECU and the vehicle subsystem assembly further comprises:
   using, at the ECU, the second key to encrypt data to be transmitted to the vehicle subsystem assembly via the Ethernet link.
Embodiment 14: The method of embodiment 11, wherein:
   receiving the first key comprises receiving the first key in a second encrypted message from the backend system; and
   the method further comprises decrypting, at the ECU, the second encrypted message using a second key stored in an memory of the ECU.
Embodiment 15: The method of embodiment 11, wherein the ECU and the vehicle subsystem assembly are included within an in-vehicle communication network.
Embodiment 16: An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising:
   an Ethernet communication interface configured to communicate with the ECU via the Ethernet link;
   another communication interface configured to communicate with a computer system separate from the vehicle subsystem assembly, the computer system being communicatively coupled to the backend system;
   a memory; and
   a controller coupled to i) the Ethernet communication interface, ii) the other communication interface, and iii) the memory, the controller configured to:
      receive a first identifier of the vehicle subsystem assembly from the vehicle subsystem assembly via the Ethernet link and the Ethernet communication interface as part of a procedure for i) obtaining a first key for secure communications with the vehicle subsystem assembly via the Ethernet link and ii) providing the first key to the vehicle subsystem assembly,
      control the other communication interface to transmit the first identifier to the computer system as part of the procedure for i) obtaining the first key and ii) providing the first key to the vehicle subsystem assembly,
      in response to transmitting the first identifier to the computer system, receive the first key from the backend system via the other communication interface as part of the procedure for i) obtaining the first key and ii) providing the first key to the vehicle subsystem assembly,
         store the first key in the memory,
      in response to transmitting the first identifier to the computer system, receive a first encrypted message from the backend system via the other communication interface as part of the procedure for i) obtaining the first key and ii) providing the first key to the vehicle subsystem assembly, the first encrypted message including the first key,
      control the Ethernet communication interface to transmit the first encrypted message to the vehicle subsystem assembly via the Ethernet link as part of the procedure for i) obtaining the first key and ii) providing the first key to the vehicle subsystem assembly, and
      use the first key in connection with secure communications between the ECU and the vehicle subsystem assembly.
Embodiment 17: The apparatus of embodiment 16, further comprising encryption circuitry and decryption circuitry, wherein the controller is configured to, as part of using the first key in connection with secure communications between the ECU and the vehicle subsystem assembly:
   generate a second key;
   control the encryption circuitry to use the first key to generate a second encrypted message that includes the second key;
   control the Ethernet communication interface to transmit the second encrypted message to the vehicle subsystem assembly via the Ethernet link; and
   control the decryption circuitry to decrypt data received from the vehicle subsystem assembly via the Ethernet link using the second key.
Embodiment 18: The apparatus of embodiment 17, wherein the controller is configured to, as part of using the first key in connection with secure communications between the ECU and the vehicle subsystem assembly:
   control the encryption circuitry to encrypt data to be transmitted to the vehicle subsystem assembly via the Ethernet link using the second key.
Embodiment 19: The apparatus of embodiment 16, further comprising decryption circuitry, wherein the controller is further configured to:
   receive the first key in a second encrypted message from the backend system; and
   control the decryption circuitry to decrypt the second encrypted message using a second key stored in the memory.
Embodiment 20: The apparatus of embodiment 16, wherein the ECU and the vehicle subsystem assembly are included within an in-vehicle communication network.

## Claims

1. A method in a system that comprises i) a backend system that provides keys for symmetric encryption in vehicles, ii) an electronic control unit (ECU) communicatively coupled to the backend system, and iii) a vehicle subsystem assembly communicatively coupled to the ECU via an Ethernet link, the method comprising:
transmitting, by the vehicle subsystem assembly, a first identifier of the vehicle subsystem assembly to the ECU via the Ethernet link as part of a procedure for obtaining, from the backend system, a first key for secure communications with the ECU via the Ethernet link;
after transmitting the first identifier of the vehicle subsystem assembly to the ECU, receiving, at the vehicle subsystem assembly, a first encrypted message from the ECU via the Ethernet link as part of the procedure for obtaining the first key;
decrypting, at the vehicle subsystem assembly, the first encrypted message using a second key stored at the vehicle subsystem assembly to generate a first decrypted message;
determining, at the vehicle subsystem assembly, whether the first decrypted message includes a second identifier that matches the first identifier;
extracting, at the vehicle subsystem assembly, the first key from the decrypted message; and
in response to determining that the decrypted message includes the second identifier that matches the first identifier, using, at the vehicle subsystem assembly, the first key in connection with secure communications between the vehicle subsystem assembly and the ECU.

2. The method of claim 1, further comprising:
randomly or pseudorandomly generating, at the vehicle subsystem assembly, a challenge number;
transmitting, by the vehicle subsystem assembly, the challenge number to the ECU via the Ethernet link in connection with transmitting the first identifier to the ECU as part of the procedure for obtaining the first key; and
determining, at the vehicle subsystem assembly, whether the decrypted message includes the challenge number;
wherein using the first key in connection with secure communications between the vehicle subsystem assembly and the ECU is further in response to determining that the decrypted message includes the challenge number.

3. The method of claim 1 or 2, further comprising:
after receiving the first encrypted message, receiving, at the vehicle subsystem assembly, a second encrypted message from the ECU via the Ethernet link;
wherein using the first key in connection with secure communications between the vehicle subsystem assembly and the ECU comprises:
using, at the vehicle subsystem assembly, the first key to decrypt the second encrypted message to generate a second decrypted message,
extracting, at the vehicle subsystem assembly, a third key from the decrypted message, and
using, at the vehicle subsystem assembly, the third key to encrypt data to be transmitted to the ECU via the Ethernet link; and/or
wherein using the first key in connection with secure communications between the vehicle subsystem assembly and the ECU further comprises:
using, at the vehicle subsystem assembly, the third key to decrypt data received from the ECU via the Ethernet link.

4. The method of one of claims 1 to 3, wherein the ECU and the vehicle subsystem assembly are included within an in-vehicle communication network.

5. An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising:
an Ethernet communication interface configured to communicate with the ECU via the Ethernet link;
a memory configured to store a first identifier of the vehicle subsystem assembly and a first key;
decryption circuitry; and
a controller coupled to i) the Ethernet communication interface, ii) the memory, and iii) the decryption circuitry, the controller configured to:
control the Ethernet communication interface to transmit the first identifier of the vehicle subsystem assembly to the ECU via the Ethernet link as part of a procedure for obtaining, from the backend system, a second key for secure communications with the ECU via the Ethernet link,
after the Ethernet communication interface transmits the first identifier, receive a first encrypted message from the ECU via the Ethernet link and the Ethernet communication interface as part of the procedure for obtaining the second key,
control the decryption circuitry to decrypt the first encrypted message using the first key to generate a first decrypted message,
determine whether the first decrypted message includes a second identifier that matches the first identifier,
extract the second key from the decrypted message, and
in response to determining that the decrypted message includes the second identifier that matches the first identifier, use the second key in connection with secure communications between the vehicle subsystem assembly and the ECU.

6. The apparatus of claim 5, wherein the controller is further configured to:
randomly or pseudorandomly generate a challenge number;
control the Ethernet communication interface to transmit the challenge number to the ECU via the Ethernet link in connection with transmitting the first identifier to the ECU as part of the procedure for obtaining the first key; and
determine whether the decrypted message includes the challenge number;
use the second key in connection with secure communications between the vehicle subsystem assembly and the ECU further in response to determining that the decrypted message includes the challenge number.

7. The apparatus of claim 5 or 6, further comprising encryption circuitry coupled to the controller, wherein the controller is further configured to:
after receiving the first encrypted message, receive a second encrypted message from the ECU via the Ethernet link and via the Ethernet communication link; and
as part of using the second key in connection with secure communications between the vehicle subsystem assembly and the ECU:
control the decryption circuity to decrypt the second encrypted message using the second key to generate a second decrypted message,
extract a third key from the decrypted message, and
control the encryption circuity to encrypt data to be transmitted to the ECU via the Ethernet link using the third key; and/or
wherein the controller is further configured to, as part of using the second key in connection with secure communications between the vehicle subsystem assembly and the ECU:
control the decryption circuitry to decrypt data received from the ECU via the Ethernet link using the third key.

8. The apparatus of claims 5 to 7, wherein the ECU and the vehicle subsystem assembly are included within an in-vehicle communication network.

9. A method in a system that comprises i) a backend system that provides keys for symmetric encryption in vehicles, ii) an electronic control unit (ECU) communicatively coupled to the backend system via a secure communication link, and iii) a vehicle subsystem assembly communicatively coupled to the ECU via an Ethernet link distinct from the secure communication link, the method comprising:
receiving, at the ECU, a first identifier of the vehicle subsystem assembly from the vehicle subsystem assembly via the Ethernet link as part of a procedure for i) obtaining a first key for secure communications with the vehicle subsystem assembly via the Ethernet link and ii) providing the first key to the vehicle subsystem assembly;
transmitting, by the ECU, the first identifier to the backend system via the secure communication link as part of the procedure for i) obtaining the first key and ii) providing the first key to the vehicle subsystem assembly;
in response to transmitting the first identifier to the backend system, receiving, at the ECU, the first key as part of the procedure for i) obtaining the first key and ii) providing the first key to the vehicle subsystem assembly;
in response to transmitting the first identifier to the backend system, receiving, at the ECU, a first encrypted message as part of the procedure for i) obtaining the first key and ii) providing the first key to the vehicle subsystem assembly, the first encrypted message including the first key;
transmitting, by the ECU, the first encrypted message to the vehicle subsystem assembly via the Ethernet link as part of the procedure for i) obtaining the first key and ii) providing the first key to the vehicle subsystem assembly; and
using, at the ECU, the first key in connection with secure communications between the ECU and the vehicle subsystem assembly.

10. The method of claim 9, wherein using the first key in connection with secure communications between the ECU and the vehicle subsystem assembly comprises:
generating, at the ECU, a second key;
using, at the ECU, the first key to generate a second encrypted message that includes the second key;
transmitting, by the ECU, the second encrypted message to the vehicle subsystem assembly via the Ethernet link; and
using, at the ECU, the second key to decrypt data received from the vehicle subsystem assembly via the Ethernet link.

11. The method of claim 10, wherein using the first key in connection with secure communications between the ECU and the vehicle subsystem assembly further comprises: using, at the ECU, the second key to encrypt data to be transmitted to the vehicle subsystem assembly via the Ethernet link.

12. The method of claims 9 to 11, wherein:
receiving the first key comprises receiving the first key in a second encrypted message from the backend system; and
the method further comprises decrypting, at the ECU, the second encrypted message using a second key stored in an memory of the ECU; or
wherein the ECU and the vehicle subsystem assembly are included within an in-vehicle communication network.

13. An apparatus for use in a vehicle subsystem assembly within a system that comprises i) a backend system that provides keys for symmetric encryption in vehicles, ii) an electronic control unit (ECU) communicatively coupled to the backend system, and iii) the vehicle subsystem assembly communicatively coupled to the ECU via an Ethernet link, the apparatus comprising:
an Ethernet communication interface configured to communicate with the ECU via the Ethernet link;
another communication interface configured to communicate with a computer system separate from the vehicle subsystem assembly, the computer system being communicatively coupled to the backend system;
a memory; and
a controller coupled to i) the Ethernet communication interface, ii) the other communication interface, and iii) the memory, the controller configured to:
receive a first identifier of the vehicle subsystem assembly from the vehicle subsystem assembly via the Ethernet link and the Ethernet communication interface as part of a procedure for i) obtaining a first key for secure communications with the vehicle subsystem assembly via the Ethernet link and ii) providing the first key to the vehicle subsystem assembly,
control the other communication interface to transmit the first identifier to the computer system as part of the procedure for i) obtaining the first key and ii) providing the first key to the vehicle subsystem assembly,
in response to transmitting the first identifier to the computer system, receive the first key from the backend system via the other communication interface as part of the procedure for i) obtaining the first key and ii) providing the first key to the vehicle subsystem assembly,
store the first key in the memory,
in response to transmitting the first identifier to the computer system, receive a first encrypted message from the backend system via the other communication interface as part of the procedure for i) obtaining the first key and ii) providing the first key to the vehicle subsystem assembly, the first encrypted message including the first key,
control the Ethernet communication interface to transmit the first encrypted message to the vehicle subsystem assembly via the Ethernet link as part of the procedure for i) obtaining the first key and ii) providing the first key to the vehicle subsystem assembly, and
use the first key in connection with secure communications between the ECU and the vehicle subsystem assembly.

14. The apparatus of claim 13, further comprising encryption circuitry and decryption circuitry, wherein the controller is configured to, as part of using the first key in connection with secure communications between the ECU and the vehicle subsystem assembly:
generate a second key;
control the encryption circuitry to use the first key to generate a second encrypted message that includes the second key;
control the Ethernet communication interface to transmit the second encrypted message to the vehicle subsystem assembly via the Ethernet link; and
control the decryption circuitry to decrypt data received from the vehicle subsystem assembly via the Ethernet link using the second key; and/or
wherein the controller is configured to, as part of using the first key in connection with secure communications between the ECU and the vehicle subsystem assembly:
control the encryption circuitry to encrypt data to be transmitted to the vehicle subsystem assembly via the Ethernet link using the second key.

15. The apparatus of claims 13 to 14, further comprising decryption circuitry, wherein the controller is further configured to:
receive the first key in a second encrypted message from the backend system; and
control the decryption circuitry to decrypt the second encrypted message using a second key stored in the memory; or
wherein the ECU and the vehicle subsystem assembly are included within an in-vehicle communication network.
